# EUROPÄISCHE PATENTSCHRIFT

(11) **EP 2 907 620 B1**
(45) Veröffentlichungstag und Bekanntmachung des Hinweises auf die Patenterteilung: **05.06.2019**
(21) Anmeldenummer: 15155266.8
(22) Anmeldetag: 16.02.2015
(51) Int. Cl.: B23Q 11/14

(54) **Werkzeugmaschine mit einem aus Strukturteilen aufgebauten Maschinengestell und Verfahren dafür**
Machine tool with a machine frame made of structural components and method therefor
Machine-outil dotée d'un bâti de machine composé d'éléments structuraux et méthode pour celle-ci

(30) Priorität: 17.02.2014 DE 102014202879
(43) Veröffentlichungstag der Anmeldung: 19.08.2015
(73) Patentinhaber: DECKEL MAHO Pfronten GmbH, 87459 Pfronten (DE)
(72) Erfinder: Gronbach, Hans, 87637 Eisenberg (DE)
(74) Vertreter: MERH-IP Matias Erny Reichl Hoffmann Patentanwälte PartG mbB

(56) Entgegenhaltungen:
- EP-A1- 2 561 955
- WO-A1-2008/010309
- JP-A- S61 214 929
- JP-A- 2005 262 379
- US-A- 6 089 797

## Beschreibung

Die vorliegende Erfindung betrifft eine Werkzeugmaschine mit einem aus Strukturteilen aufgebauten Maschinengestell und daran montierten Komponenten, die Funktionskomponenten umfassen, die im Betrieb der Werkzeugmaschine Wärme erzeugen. Mit Hilfe eines Strömungskanalsystems werden dabei temperaturbedingte Verformungen der Strukturteile der Werkzeugmaschine reduziert. Aus dem Stand der Technik sind verschiedene Vorrichtungen und Verfahren zur Reduktion von temperaturbedingten Verformungen einer Werkzeugmaschine bekannt. Aus der DE 41 32 822 A1 ist beispielsweise eine Kühlung mit einer Sprühdüse bekannt. Dabei wird Kühlmittel über eine frei schwenkbare Sprühdüse auf vorgegebene Stellen der Werkzeugmaschine gesprüht um diese Stellen zu kühlen.

Die JP 2005 262379 A betrifft eine Werkzeugmaschine zum Schneiden eines Werkstücks. An einem Werkzeugmaschinenrahmen ist eine Kühlplatte lösbar gelagert wobei die Kühlplatte zum Kühlen des Werkzeugmaschinenrahmens durch Umwälzung eines Wärmeaustauschöls eingerichtet ist.

Aus der WO 2012/032423 A1 ist eine Maschine mit einem Ausgleichsmechanismus bekannt. Dabei wird die Verformung der Maschine über Detektionseinrichtungen ermittelt und anschließend wird über die Korrekturvorrichtung ein Ausgleich der ermittelten Abweichungen durchgeführt. Somit findet hier lediglich eine Kompensation der Verformungen statt, ohne die Werkzeugmaschine zu kühlen.

Die JP-S-61214929 A betrifft ein System zur Reduktion der Wärmeausdehnungsunterschiede zwischen einem oberen und einem unteren Teil eines Bettes einer Maschine. Dazu ist im oberen Teil des Bettes eine Nut gebildet, welche das Schneideöl aufnimmt. Über eine Pumpe wird das Schneideöl befördert. Die Nut ist über eine Leitung an einer Seitenfläche des Bettes mit einem Kanal verbunden, in dem das Schneideöl vorliegt.

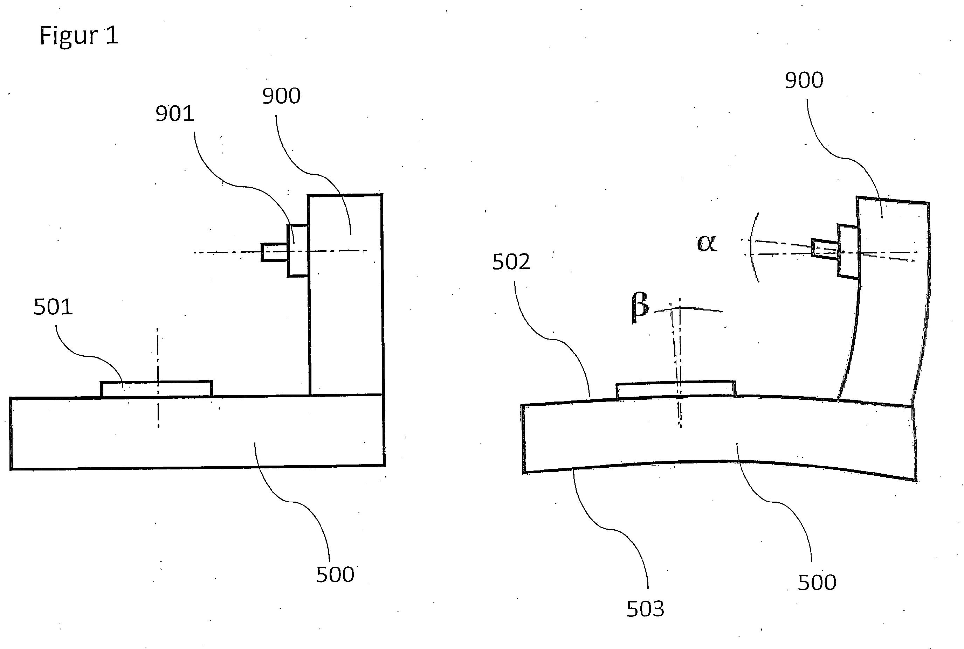

Die genannten temperaturbedingten Verformungen einer Werkzeugmaschine sind exemplarisch in Figur 1 dargestellt. Die in Figur 1 dargestellte Werkzeugmaschine besteht aus einem Maschinenbett 500, einem Ständer 900, einem Maschinentisch 501 und einer Spindel. Das Maschinenbett 500 ist über Führungen mit dem Maschinentisch 501 verbunden und der Ständer 900, welcher eine Spindel 901 aufnimmt, ist auf dem Maschinenbett 500 fixiert. Im Betrieb der Werkzeugmaschine werden die Bereiche, in denen die wärmeerzeugenden Funktionskomponenten, wie z. B. die Spindel 901 oder Führungen angeordnet sind, vergleichsweise stark erwärmt. Diese einseitige Erwärmung der Strukturbauteile der Werkzeugmaschine führt zu einer ungleichmäßigen Verformung bzw. Verbiegung der Strukturbauteile der Werkzeugmaschine. Durch diese Verbiegungen verlagern sich auch die Bearbeitungsachsen der Werkzeugmaschine. In der rechten Darstellung in Figur 1 ist eine solche ungleichmäßig erwärmte Werkzeugmaschine gezeigt. Die Spindelbearbeitungsachse verformt sich hier um den Winkel α und die Bearbeitungsachse des Maschinentischs 501 wird um den Winkel ß verformt. Bei der dargestellten Werkzeugmaschine resultieren diese Verformungen insbesondere aus den unterschiedlichen Temperaturen an der Oberseite und Unterseite des Maschinenbetts 500. Die Temperatur an der Unterseite des Maschinenbetts 503 ist im dargestellten Beispiel kleiner als die Temperatur an der Oberseite des Maschinenbetts 502. Durch diese unterschiedlichen Temperaturen dehnen sich die verschiedenen Seiten des Maschinenbetts 500 unterschiedlich aus. Die Oberseite des Maschinenbetts 502 dehnt sich weiter aus als die Unterseite des Maschinenbetts, da die Temperatur an der Unterseite des Maschinenbetts 503 niedriger ist als an der Oberseite des Maschinenbetts 502. Da sowohl der Ständer 900 als auch der Maschinentisch 501 auf dem Maschinenbett 500 angebracht sind, und sich dieses Maschinenbett 500 nun in Betrieb verformt bzw. krümmt, ergeben sich die verschiedenen Änderungen der Bearbeitungsachsen. Die dargestellten Verbiegungs- und Krümmungseffekte sind natürlich umso größer, je länger das Maschinenbett 500 ist und je größer die Temperaturdifferenzen an diesem sind.

Es ist eine Aufgabe der vorliegenden Erfindung, die eben dargestellten temperaturbedingten Veränderungen der Werkzeugmaschine möglichst kostengünstig und effektiv auszugleichen. Insbesondere sollen die temperaturbedingten Krümmungen und Biegungen der Werkzeugmaschine reduziert werden.

Diese Aufgabe wird durch die Merkmale des unabhängigen Anspruchs gelöst. Die abhängigen Ansprüche betreffen vorteilhafte Ausführungsformen der Erfindung.

Die Werkzeugmaschine mit einem aus Strukturteilen aufgebauten Maschinengestell und daran montierten Komponenten umfasst Funktionskomponenten, die im Betrieb der Werkzeugmaschine Wärme erzeugen. Die Wärme kann dabei durch Wärmetransport in die Strukturteile und die Komponenten eingetragen werden. Die Werkzeugmaschine kann ein Strömungskanalsystem aufweisen, in dem ein Temperiermedium umgewälzt werden kann, das derart an den Strukturteilen und den Komponenten der Werkzeugmaschine angeordnet sein kann, dass infolge der Durchströmung mit dem Temperiermedium die durch die Funktionskomponenten erzeugte Wärme in dem Maschinengestell und den Komponenten verteilt werden kann.

Durch die gleichmäßige Verteilung der eingebrachten Wärme im betreffenden Strukturteil der Werkzeugmaschine können die Temperaturunterschiede in den Strukturbauteilen reduziert werden und somit auch die jeweiligen Verbiegungen der Strukturteile.

Durch das erfindungsgemäße Strömungskanalsystem findet somit keine Kühlung der Werkzeugmaschine statt, sondern vielmehr ein Ausgleich der unterschiedlichen Temperaturen der verschiedenen Bereiche der Strukturbauteile der Werkzeugmaschine. Durch die gleichmäßige Temperatur im Maschinengestell und in den weiteren Strukturteilen der Werkzeugmaschine ist eine gleichmäßige temperaturbedingte Ausdehnung unter Vermeidung von Verbiegungen der Strukturteile und Komponenten der Werkzeugmaschine möglich.

Anders als bei dem bekannten Prinzip der Kühlung der Werkzeugmaschine, bei dem die Kühlkanäle unmittelbar und ausschließlich bei den wärmeerzeugenden Funktionskomponenten zur Abfuhr der eingetragenen Wärme aus dem Maschinengestell in die Umgebung oder in einer Kältemaschine angeordnet sind, werden bei der vorliegenden Erfindung Kanäle sowohl in den Bereichen mit Wärmeerzeugern als auch in den Bereichen ohne Wärmeerzeugern vorgesehen. Durch diese Form der Anordnung der Kanäle ist es möglich, die vorherrschenden Temperaturgradienten im Strukturbauteil der Werkzeugmaschine abzubauen und somit die Biegungen zu reduzieren und gleichzeitig auf eine Kältemaschine zur Wärmeabfuhr zu verzichten.

Mit anderen Worten liegt der erfindungsgemäße Gedanke darin, dass es nicht mehr um eine Kühlung der erwärmten Strukturkomponenten geht, sondern darum, dass die entstandene Wärme über das erfindungsgemäße Strömungskanalsystem gleichmäßig im Bauteil verteilt wird. Eine Kühlung ist deshalb primär nicht entscheidend, da Verlagerungen/Verschiebungen mit steuerungstechnischen Kompensationen, wie oben im Stand der Technik beschrieben, grundsätzlich ausgeglichen werden können, während Verbiegungen an der Werkzeugmaschine bzw. die aus ihnen resultierenden oben erläuterten Winkelfehler grundsätzlich über das Prinzip der Kühlung nicht kompensiert werden können. Der Erfindung liegt dabei die Beobachtung zugrunde, dass Bauteile nicht unter Einfluss von Wärmebelastung verbiegen, wenn die Wärme am Entstehungsort abgeführt wird und die Bauteile über ihren gesamten Bauraum gleichmäßig temperiert sind. Wichtig ist dabei, dass alle Kanäle des erfindungsgemäßen Strömungskanalsystems vom gleichtemperierten Medium, welches vorzugsweise mittels einer Pumpe befördert wird, geströmt werden.

Das Strömungskanalsystem kann derart an den Strukturteilen und Komponenten der Werkzeugmaschine angeordnet sein, dass Verkippungen und/oder Verlagerungen der Strukturteilen und/oder Komponenten verhindert werden können. Insbesondere werden Teile des Strömungskanalsystems an den warmen Stellen der Strukturteile und Komponenten angebracht und weitere Teile davon beabstandet in kalten Regionen, sodass ein Wärmeausgleich stattfinden kann und die Werkzeugmaschine temperiert werden kann. Auf diese Weise kann die Bearbeitungsgenauigkeit der Werkzeugmaschine erhöht werden, da eine ungleichmäßige Ausdehnung vermieden wird.

Das Temperiermedium kann über eine Pumpe umgewälzt werden, und dabei können alle Strömungskanäle des Strömungskanalsystems durchströmt werden. Dadurch wird eine besonders effiziente Temperierung der Strukturteile und/oder Komponenten gewährleistet. Eine Kältemaschine zur Temperierung ist daher nicht erforderlich, da über die Einstellung der Leistung der Pumpe in Abhängigkeit von der erzeugten Wärme der Funktionskomponenten eine Temperierung möglich ist.

Die Strömungskanäle des Strömungskanalsystems der Werkzeugmaschine können als Hohlprofile auf der Oberfläche der Strukturbauteile und Komponenten der Werkzeugmaschine angeordnet sein. Durch die Anordnung der Hohlprofile direkt auf der Oberfläche der Komponenten der Werkzeugmaschine ist einerseits eine einfache Ausgestaltung der erfindungsgemäßen Werkzeugmaschine möglich und andererseits ist es möglich, bei vorhandenen Werkzeugmaschinen die erfindungsgemäßen Strömungskanäle nachzurüsten. Die Verwendung von Hohlprofilen als Strömungskanäle stellt zudem eine kostengünstige und wirkungsvolle Alternative zu aufwändig erzeugten integrierten Strömungskanälen in Gussbauteilen dar.

Die Strömungskanäle des Strömungskanalsystems können als Kühlprofile ausgestaltet sein, wobei jedes Kühlprofil zumindest einen Vorlaufkanal und einen Rücklaufkanal zur Aufnahme des Temperiermediums umfassen kann. Durch die Bereitstellung von Kühlprofilen, welche gleichzeitig einen Vorlaufkanal und einen Rücklaufkanal aufweisen, ist es möglich, mit der Befestigung nur eines einzigen Profils eine gesamte Kante der Werkzeugmaschine vollständig zu temperieren. Zudem können die Öffnungen des Vorlaufkanals und des Rücklaufkanals an derselben Seite des Kühlprofils vorgesehen sein, sodass ein sehr einfacher Anschluss an das Kühlsystem möglich wird. Zudem können diese Kühlprofile vorgefertigt werden und bei Bedarf auf die gewünschte Länge zugeschnitten werden, sodass eine kostengünstige Herstellung des Strömungskanalsystems gewährleistet ist.

Der Vorlaufkanal des Kühlprofils kann mit dem Rücklaufkanal leitend verbunden sein, sodass das Temperiermedium umgeleitet werden kann. Durch diese besondere Ausgestaltung kann unter Verwendung eines einzigen Kühlprofils bereits ein Umwälzkreislauf oder Strömungskanalsystem ausgebildet werden. Dadurch können die Kosten und auch die Komplexität der Werkzeugmaschine mit dem Strömungskanalsystem reduziert werden.

Der Vorlaufkanal kann mit dem Rücklaufkanal über eine geschweißte Platte mit eingefräster Bahn zur Umlenkung des Vorlaufs in den Rücklauf verbunden sein. Dadurch ist es möglich, den Vorlaufkanal kostengünstig mit dem Rücklaufkanal zu verbinden, ohne einen großen Strömungswiderstand in den Strömungskanälen auszubilden.

Die Kühlprofile können auf die Strukturteile und/oder Komponenten der Werkzeugmaschine aufgeschraubt sein. Durch das Anbringen der Kühlprofile mittels Schraubverbindungen ist einerseits eine gute Verbindung zwischen den Seitenflächen der Kühlprofile und den Strukturteilen und/oder Komponenten der Werkzeugmaschine gewährleistet und andererseits ermöglicht eine Schraubverbindung eine nachträgliche Demontage der Kühlprofile. Tritt somit im Laufe der Zeit Verschleiß in einem Kühlprofil auf, so lässt sich dieses einfach abschrauben und austauschen.

Die Strömungskanäle des Strömungskanalsystems der Werkzeugmaschine können auch als Rohre ausgestaltet sein und in den Nuten der Strukturteile und/oder Komponenten der Werkzeugmaschine angebracht werden. Auf diese Weise ist es möglich die Strömungskanäle möglichst platzsparend an der Werkzeugmaschine anzubringen und somit auch Flächen und Kanten der Werkzeugmaschine zu temperieren, welche nur einen engen Bauraum aufweisen.

Die Rohre der Strömungskanäle des Strömungskanalsystems können über Befestigungsdeckel in den Nuten fixiert sein. Mit Hilfe solcher Befestigungsdeckel lassen sich die Rohre besonders einfach in den Nuten fixieren bzw. lässt sich über die Befestigungsdeckel auch ein Druck auf die Rohre ausüben, um einen vollständigen Kontaktbereich der Rohre zum Strukturteil und/oder Komponente der Werkzeugmaschine zu gewährleisten und somit auch die Wärmübertragung zu optimieren.

Die Rohre der Strömungskanäle des Strömungskanalsystems können aus Kupfer sein. Durch die besonders vorteilhaften Eigenschaften der hohen Wärmeleitfähigkeit von Kupfer lässt sich der Wärmeausgleich in der Werkzeugmaschine weiter beschleunigen. Somit kann bei Verwendung von Kuper der Temperaturgradient in der Werkzeugmaschine weiter reduziert werden.

Die Strömungskanäle des Strömungskanalsystems können auch als Bohrungen in den Komponenten und/oder Strukturteilen der Werkzeugmaschine ausgestaltet sein. Dadurch ist es möglich in unmittelbarer Nähe der wärmeerzeugenden Funktionskomponenten das Temperiermedium umzuwälzen und somit eine verbesserte Temperierung der Werkzeugmaschine zu gewährleisten.

Die Strömungskanäle des Strömungskanalsystems können im Spindelkern und gleichzeitig in der Spindellagerung angeordnet sein. Dadurch kann der im Spindelkern und in der Spindellagerung auftretende hohe Wärmeeintrag in die Werkzeugmaschine bereits am Entstehungsort abgeführt werden. Zudem werden insbesondere Verformungen und Krümmungen der empfindlichen Spindel reduziert.

Die Werkzeugmaschine kann ein Maschinenbett und einen Maschinenständer umfassen. Die Strömungskanäle des Strömungskanalsystems der Werkzeugmaschine können auf der Oberseite und der Unterseite entlang der Kanten des Maschinenbetts, und auf der Oberseite und der Unterseite entlang der Kanten des Ständers angeordnet sein. Diese vorteilhafte Anordnung der Strömungskanäle entlang der Oberseiten und Unterseiten bewirkt einen besonders effektiven Temperaturausgleich, da sich insbesondere Temperaturgradienten im Maschinenbett und dem Ständer, welche zu den größten Strukturteilen der Werkzeugmaschine zählen, besonders stark auf die Verbiegung der Werkzeugmaschine auswirken. Zudem weist das Maschinenbett und der Ständer große Flächen für die Anbringung der Strömungskanäle auf, sodass diese dort kostengünstig und einfach installiert werden können.

Die Werkzeugmaschine kann eine Pumpe zur Regelung des Volumenstroms des Temperiermediums aufweisen. Die Pumpe kann so eingerichtet sein, dass der Betrag der Temperaturdifferenz des Temperiermediums in den verschiedenen Bereichen des Strömungskanalsystems auf maximal 3 °C , und bevorzugt auf maximal 1°C, begrenzt werden kann. Somit kann über die Leistung der Pumpe der Volumenstrom in den Strömungskanälen geregelt werden. Über den Volumenstrom kann der Wärmetransport gesteuert werden und in weiterer Folge kann somit die Differenztemperatur im Strömungskanalsystem eingestellt werden. Die Krümmungen und Verbiegungen verschiedener Werkzeugmaschinenstrukturen können besonders gut reduziert werden, wenn der Betrag der Differenztemperatur des Temperiermediums in den verschiedenen Bereichen des Strömungskanalsystems unter 3 Grad Celsius (bzw. maximal 3° Celsius beträgt) liegt bzw. bevorzugt unter 1 Grad Celsius (bzw. maximal 1 °C). Somit kann durch die Begrenzung der Temperaturdifferenz eine besonders Krümmungsfreie und Verbiegungsarme Struktur gewährleistet werden. Die Limitierung der Temperaturdifferenz führt zudem zu einer starken Reduktion der Verformungen der Kühlkanäle, was sich unter anderem positiv auf die Dichtheit des Kühlkanalsystems auswirkt.

Die Werkzeugmaschine kann zudem zur Erfassung eines Temperaturgradienten einen ersten Temperatursensor im Bereich der Funktionskomponenten und zumindest ein zweiten Temperatursensor in einem Bereich ohne Funktionskomponenten umfassen. Durch die Ermittlung eines Temperaturgradienten über zwei Temperatursensoren, kann eine effiziente und einfache Regelung des Volumenstroms des Temperiermediums vorgenommen werden. Bevorzugt sind die Temperatursensoren einerseits bei den wärmeerzeugenden Funktionskomponenten angebracht und andererseits in den kalten Bereichen der Werkzeugmaschine, sodass die Maximaltemperatur und die Minimaltemperatur im Strömungskanalsystem ermittelt werden kann. Dadurch lässt sich eine sehr effiziente Regelung des Volumenstroms ausbilden.

Die Werkzeugmaschine kann zudem eine Regelungs- und Steuereinheit umfassen. Diese Einheit kann so eingerichtet sein, dass über die Leistung der Pumpe der Volumenstrom des Temperiermediums geregelt werden kann, sodass der Betrag der Differenztemperatur zwischen dem ersten und zweiten Temperatursensor auf maximal 3 °C, und bevorzugt auf maximal 1°C, begrenzt werden kann. Die Regelung des Volumenstroms basierend auf der Differenztemperatur, stellt eine einfache und kostengünstige Möglichkeit zur Begrenzung der maximal auftretenden Krümmungen und Verbiegungen der jeweiligen Strukturteile der Werkzeugmaschine dar.

Ein Verfahren zum Temperieren einer Werkzeugmaschine mit Strömungskanälen die ein Strömungskanalsystems ausbilden können in dem ein Temperiermedium umgewälzt wird, kann den Schritt aufweisen: Ausgleichen des Temperaturgradienten in der Werkzeugmaschine ausschließlich durch Umwälzen des Temperiermediums in den Strömungskanälen bzw. im Strömungskanalsystem. Durch das Ausgleichen des Temperaturgradienten in der Werkzeugmaschine ausschließlich durch das Umwälzen des Temperiermediums im Strömungskanalsystem ist es möglich, die Biegungen der Strukturbauteile der Werkzeugmaschine zu reduzieren, ohne dabei eine Kältemaschine zu verwenden. Somit werden bei einer Temperierung nach dem erfindungsgemäßen Verfahren die Kosten und die Komplexität der temperierten Werkzeugmaschine reduziert.

Das Verfahren zum Temperieren einer Werkzeugmaschine wobei die Werkzeugmaschine erste Bereiche aufweisen kann, in denen Funktionskomponenten angeordnet sein können und zweite Bereiche, die von den ersten Bereichen beabstandet sein können, wobei der durch Funktionskomponenten erzeugte Wärmeeintrag in die zweiten Bereiche geringer sein kann als in die ersten Bereiche, und wobei die Werkzeugmaschine einen Ständer (900) und ein Maschinenbett (500) umfassen kann. Das Strömungskanalsystem kann zudem erste und zweite Strömungskanäle aufweisen kann. Das Verfahren kann folgende Schritte umfassen: Umwälzen des Temperiermediums von den ersten Strömungskanälen des Maschinenbetts in die zweiten Strömungskanäle des Maschinenbetts; Umwälzen des Temperiermediums von den zweiten Strömungskanälen des Maschinenbetts in die ersten Strömungskanäle des Ständers; Umwälzen des Temperiermediums von den ersten Strömungskanälen des Ständers in die zweiten Strömungskanäle des Ständers; und Umwälzen des Temperiermediums von den zweiten Strömungskanälen des Ständers in die ersten Strömungskanäle des Maschinenbetts. Durch das Umwälzen des Temperiermediums zwischen den Strömungskanälen des Ständers und des Maschinenbetts ist es möglich die Temperatur des Ständers und des Maschinenbetts einander anzugleichen. Dadurch werden weitere Krümmungen des Werkzeugmaschinengestells reduziert.

Das Verfahren zum Temperieren einer Werkzeugmaschine wobei die Werkzeugmaschine erste Bereiche aufweisen kann, in denen Funktionskomponenten angeordnet sein können und zweite Bereiche, die von den ersten Bereichen beabstandet sein können, wobei der durch Funktionskomponenten erzeugte Wärmeeintrag in die zweiten Bereiche geringer sein kann als in die ersten Bereiche, und wobei die Werkzeugmaschine einen Ständer (900) und ein Maschinenbett (500) umfassen kann. Das Strömungskanalsystem kann zudem erste und zweite Strömungskanäle aufweisen kann. Das Verfahren kann folgende Schritte umfassen: Umwälzen des Temperiermediums von den ersten Strömungskanälen des Maschinenbetts in die ersten Strömungskanäle des Ständers; Umwälzen des Temperiermediums von den ersten Strömungskanälen des Ständers in die zweiten Strömungskanäle des Ständers und/oder des Maschinenbetts und zurück. Durch die Verbindung der Strömungskanäle des Ständers mit den Strömungskanälen des Maschinenbetts wird gewährleistet, dass auch für den Fall, in dem nur ein Teil der wärmeerzeugenden Funktionskomponenten betrieben wird, ein möglichst geringer Temperaturgradient in der gesamten Struktur der Werkzeugmaschine erreicht werden kann.

Das Verfahren zum Temperieren einer Werkzeugmaschine kann zudem den Schritt Regeln des Volumenstroms des Temperiermediums in den Strömungskanälen über eine Pumpe umfassen. Dabei kann der Volumenstrom derart geregelt, dass der Betrag der Differenztemperatur des Temperiermediums in den verschiedenen Bereichen des Strömungskanalsystems maximal 3°C , und bevorzugt 1°C, betragen kann. Die Krümmungen und Verbiegungen verschiedener Werkzeugmaschinenstrukturen können besonders gut reduziert werden, wenn der Betrag der Differenztemperatur des Temperiermediums in den verschiedenen Bereichen des Strömungskanalsystems unter 3 Grad Celsius (bzw. maximal 3° Celsius beträgt) liegt bzw. bevorzugt unter 1 Grad Celsius (bzw. maximal 1 °C). Somit kann durch die Begrenzung der Temperaturdifferenz eine besonders Krümmungsfreie und Verbiegungsarme Struktur gewährleistet werden. Die Limitierung der Temperaturdifferenz führt zudem zu einer starken Reduktion der Verformungen der Kühlkanäle, was sich unter anderem positiv auf die Dichtheit des Kühlkanalsystems auswirkt.
- **Figur 1:**: zeigt eine Werkzeugmaschine im Ausgangszustand und im verformten Zustand.
- **Figur 2:**: zeigt ein Maschinenbett mit Kühlprofilen und einen Ständer mit Kühlprofilen.
- **Figur 3a:**: zeigt ein Kühlprofil in der Nut eines Grundelements.
- **Figur 3b:**: zeigt ein Kühlprofil in einem Befestigungsstück, das mit dem Grundelement verbunden ist.
- **Figur 3c:**: zeigt ein Kühlprofil in einer Bohrung im Grundelement.
- **Figur 4:**: zeigt ein Kühlprofil mit Vorlauf und Rücklauf, und zusätzlich einer Umlenkplatte.
- **Figur 5:**: zeigt den Querschnitt eines Kühlprofils mit Vorlauf und Rücklauf.
- **Figur 6:**: zeigt ein Maschinenbett mit Kühlprofilen an der Oberseite und Unterseite des Maschinenbetts.
- **Figur 7:**: zeigt eine Seitenansicht des Maschinenbetts und den schematischen Verlauf des Temperiermediums innerhalb eines Umwälzkreislaufs oder Strömungskanalsystems.
- **Figur 8:**: zeigt eine Werkzeugmaschine im Ausgangszustand und im verformten Zustand, wobei sich der Ständer im verformten Zustand in Richtung Maschinenbett krümmt.
- **Figur 9:**: zeigt eine Draufsicht auf das Maschinenbett mit der Gesamtlänge L.
- **Figur 10a:**: zeigt eine Vorderansicht eines Ständers mit verschiedenen Kühlprofilen.
- **Figur 10b:**: zeigt eine Rückansicht eines Maschinenständers mit verschiedenen Kühlprofilen.
- **Figur 11:**: zeigt die exemplarischen Abmessungen eines Kühlprofils mit Vorlauf und Rücklauf.
- **Figur 12:**: zeigt ein Strukturbauteil der Werkzeugmaschine, wobei die Kühlprofile in Nuten entlang der Führungen angeordnet sind.
- **Figur 13a:**: zeigt ein Grundelement mit einer Einfräsung und ein darin enthaltenes Kühlprofil, welches über einen Befestigungsdeckel befestigt ist.
- **Figur 13b:**: zeigt ein Kühlprofil, welches in einer Aussparung im Grundelement eingeklemmt ist.
- **Figur 13c:**: zeigt ein Kühlprofil, welches in eine speziell geformte Nut im Grundelement eingeklippst ist.
- **Figur 14:**: zeigt die Temperierung der Lager und des Kerns einer Spindel.
- **Figur 15:**: zeigt eine Lagerkühlung und eine Mutterkühlung der Spindel.
- **Figur 16:**: zeigt eine Lager- und Spindelkernkühlung.
- **Figur 17:**: zeigt einen Kühlring und einen Kühltopf für die Temperierung eines Vorschubantriebs der Werkzeugmaschine.
- **Figur 18:**: zeigt die Verlagerung des gekühlten Querträgers in Millimeter.
- **Figur 19:**: zeigt einen Vergleich der maximalen Verlagerungen am Querträger mit und ohne Temperierung.
- **Figur 20:**: zeigt einen Regelkreis zur Regelung des Volumenstroms des Temperiermediums
Der Temperaturgang von Werkzeugmaschinen ergibt sich aus den Veränderungen der einzelnen Strukturkomponenten der Maschine bei Veränderung des Wärmehaushalts durch innere oder äußere Wärmequellen oder auch Wärmesenken. Die auftretenden Verlagerungen und Verschiebungen können mit steuerungstechnischer Kompensation ausgeglichen werden. Die Verbiegungen bzw. die aus ihnen resultierenden Winkelfehler können jedoch nicht kompensiert werden. Kompensationen sind zudem oftmals nicht möglich, wenn Verlagerungen und Kippungen nicht separiert werden können. Eine Aufgabe der vorliegenden Erfindung ist es daher, die Verkippung der Maschinenstruktur zu verhindern, sowie Verlagerungen zu kompensieren bzw. ebenfalls zu verhindern.

Strukturteile verbiegen sich nicht unter dem Einfluss von Wärmebelastung, wenn die Wärme am Entstehungsort abgeführt wird und die Bauteile über ihren gesamten Bauraum gleichmäßig temperiert sind. Konkret sieht die Erfindung vor, entlang der Kanten und gegebenfalls zusätzlich auf den Flächen von Strukturteilen und/oder Komponenten der Werkzeugmaschine ein Temperiermedium strömen zu lassen. Das Medium kann optional gekühlt oder geheizt werden, sodass zusätzlich die Verlagerung bzw. Verschiebung kontrolliert werden kann. Wichtig jedoch ist, dass alle Temperierleitungen bzw. Strömungskanäle vom temperierten Medium, welches mittels Pumpe gefördert wird, durchströmt sind.

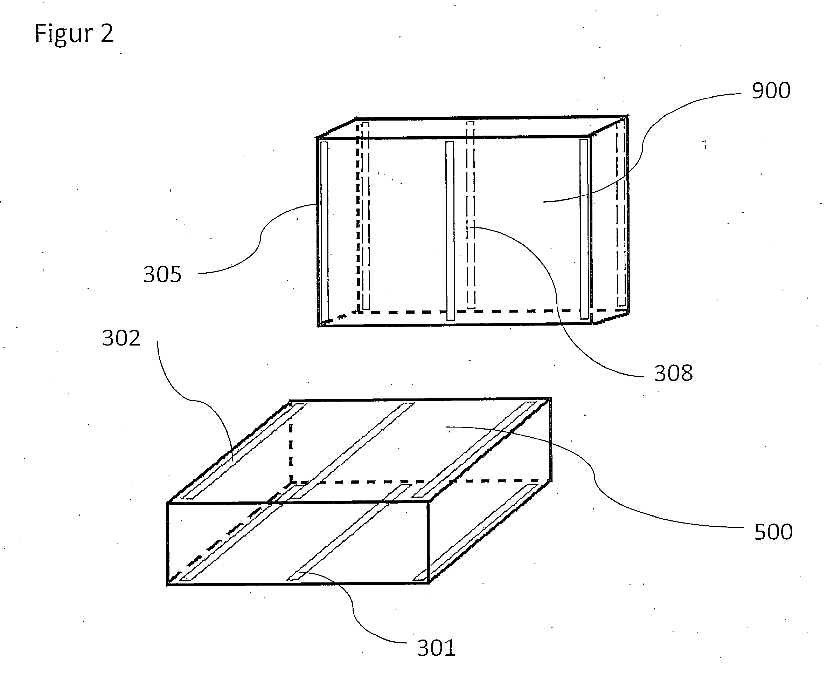

In Figur 2 ist ein Ständer 900 und ein Maschinenbett 500 dargestellt. Am Ständer 900 sind verschiedene Kühlprofile an der Vorderseite und Rückseite, direkt auf der Oberfläche, angebracht. Entlang der linken Vorderkante des Ständers 900 befindet sich das fünfte Kühlprofil 305. Parallel zu diesem Kühlprofil ist mittig am Ständer auf der Vorderseite ein weiteres Kühlprofil angeordnet. An der rechten Außenseite parallel zum fünften Kühlprofil 305 auf der Vorderseite des Ständers 900 ist zudem ein weiteres Kühlprofil angeordnet. Auch auf der Rückseite des Ständers 900 sind drei Kühlprofile parallel zueinander angeordnet. Bevorzugt werden diese Kühlprofile in Bereichen angeordnet, in denen die Temperatur des betreffenden Strukturbauteils der Werkzeugmaschine einen Maximalwert oder Minimalwert annimmt. Somit werden die Kühlprofile insbesondere im Bereich von wärmeerzeugenden Funktionskomponenten angeordnet.

Am Maschinenbett 500 sind auf der Oberseite drei parallele Kühlprofile angeordnet. An der linken Kante der Oberseite des Maschinenbetts 500 ist dabei das zweite Kühlprofil 302 angeordnet. Parallel zu dem zweiten Kühlprofil 302 befindet sich mittig am Maschinenbett das dritte Kühlprofil. Parallel zu diesem befindet sich an der rechten Außenkante, dem Kantenverlauf folgend, ein weiteres Kühlprofil. An der Unterseite des Maschinenbetts 500 befinden sich drei Kühlprofile. Diese Kühlprofile sind parallel zueinander und parallel zu den Außenkanten des Maschinenbetts 500 angeordnet. Wärmeerzeugende Funktionskomponenten sind am Maschinenbett 500 üblicherweise an der Oberseite angeordnet, während an der Unterseite des Maschinenbetts 500 keine wärmeerzeugenden Funktionskomponenten angeordnet sind, sodass die gegenüberliegende Anordnung der Kühlprofile auf der Oberseite bzw. der Unterseite des Maschinenbetts 500 zu einem idealen Ausgleich des Temperaturgradienten im Maschinenbett 500 führt. Durch das einfache Aufbringen von solchen Kühlprofilen auf die Oberfläche bzw. entlang der Kanten der Strukturbauteile der Werkzeugmaschine kann die Temperierung der Strukturbauteile der Werkzeugmaschine mit einfachen Mitteln erfolgen und somit kann ein Strömungskanalsystem einfach ausgebildet werden. Somit wird durch die genannte Ausführung eine gleichmäßige Temperaturverteilung in den jeweiligen Strukturbauteilen erreicht, und dadurch die Verbiegungen der Strukturbauteile verringert, ohne dabei eine kostspielige Kältemaschine zu benötigen. Somit wird durch die vorliegende Erfindung der Wärmeausgleich innerhalb der Struktur über die genannten Kühlprofile erhöht, da die Wärmleitung in der Struktur allein über das Material zu träge ist um die beschriebenen Krümmungen zu verhindern. Demnach kann die vorliegende Erfindung in allen Werkzeugmaschinen die Wärme- oder Kälteeinflüssen ausgesetzt sind und aufgrund dessen Ungenauigkeiten aufweisen, eingesetzt werden. Aufwendige Kühlmaßnahmen werden für die vorliegende Erfindung nicht gebraucht.

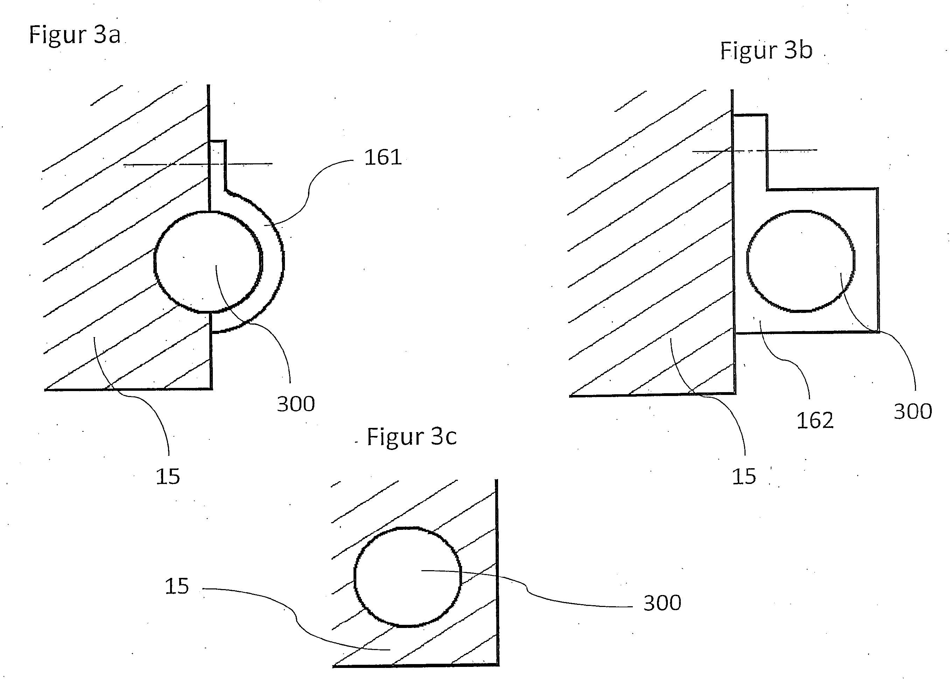

In Figur 3a ist die beispielhafte Anordnung eines Kühlprofils als Strömungskanal im Grundelement 15 dargestellt. Das Kühlprofil 300 ist in einer Einfräsung im Grundelement 15 eingelegt und über eine Befestigungsklammer 161 am Grundelement 15 fixiert. Bevorzugterweise wird die Befestigungsklammer 161 mit dem Grundelement 15 verschraubt. Bei dieser Ausführungsform wurde das Kühlprofil 300 lediglich als einfaches Rohr dargestellt, wobei auch der Einsatz von Profilen mit verschiedensten Querschnitten möglich ist.

In Figur 3b ist ein Kühlprofil in einem Befestigungsstück 162 gelagert. Das Befestigungsstück 162 ist mit dem Grundelement 15 bevorzugterweise verschraubt. Das Befestigungsstück 162 kann zudem mit dem Grundelement verschweißt sein. Dies hat den Vorteil, dass durch die Verschweißung ein besonders guter Kontakt zwischen dem Befestigungsstück 162 und dem Grundelement 15 bewirkt wird und dadurch auch die Wärmeübertragung besonders vorteilhaft ausfällt.

In Figur 3c ist das Kühlprofil 300 in einer Bohrung im Grundelement 15 dargestellt. Die Anordnung des Kühlprofils 300 in einer Bohrung ist vor allem bei Strukturbauteilen mit engen Platzverhältnissen praktikabel.

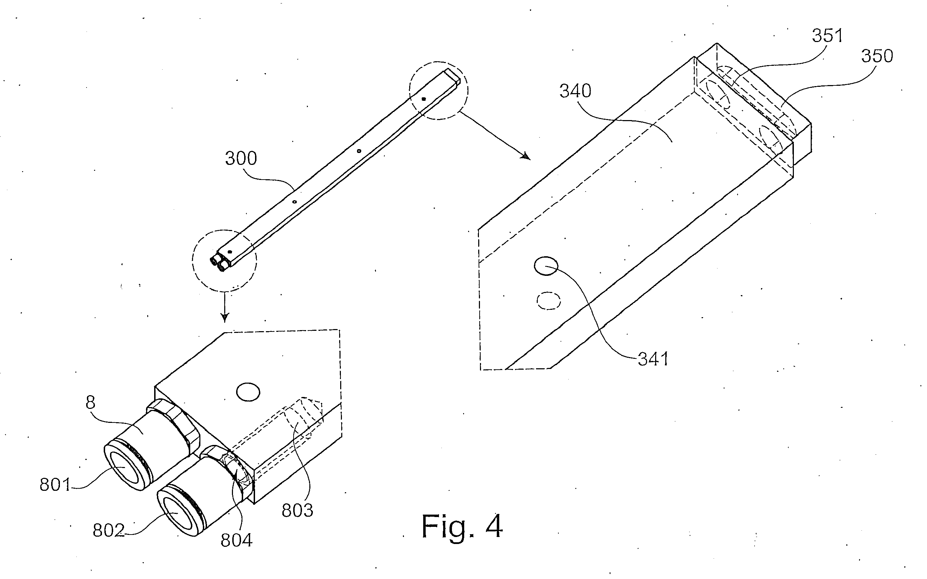

In einer besonders vorteilhaften Ausgestaltung des Strömungskanalsystems der vorliegenden Erfindung weist ein Kühlprofil nicht nur einen einzigen Strömungskanal, sondern zwei Strömungskanäle auf. In Figur 4 ist ein Kühlprofil 300 mit einem Vorlaufkanal und einem Rücklaufkanal und einer Anschlussseite 8 dargestellt. Bei dem dargestellten Kühlprofil befinden sich der Anschluss für den Vorlauf 801 und der Anschluss für den Rücklauf 802 auf derselben Seitenfläche des Kühlprofils 300. Dies gewährleistet eine besonders einfache Ausgestaltung des Umwälzkreislaufs oder Strömungskanalsystems. Der Vorlaufanschluss 801 und der Rücklaufanschluss 802 werden über die Verbindungsstelle 804 mit dem Anschlussgewinde 803 (bevorzugt G ¼ Gewinde) mit dem Kühlprofil verbunden, wobei die verschiedenen Verbindungen der Anschlüsse 801 und 802 mit dem Profil bevorzugt Einschraubverbindungen sind. Dies gewährleistet eine einfache Herstellbarkeit und hohe Zuverlässigkeit bezüglich der Dichtheit des Kühlprofils. Das dargestellte Kühlprofil hat den Vorteil, dass es sehr einfach herstellbar ist und zudem sehr leicht durch einfachen Zuschnitt des Kühlprofils 300 und nachfolgender Einschraubung der Vorlauf- und Rücklaufanschlüsse auf die gewünschte Länge herstellbar ist. Auf der gegenüberliegenden Seite des Vorlaufanschlusses 801 und Rücklaufanschlusses 802 befindet sich eine Umlenkplatte 350. Die Umlenkplatte 350 dient zur Umlenkung des Temperiermediums von dem Vorlauf in den Rücklauf bzw. umgekehrt. Die Umlenkplate 300 kann dabei z. B. auf das Kühlprofil aufgeschweißt sein. Die Umlenkplatte 350 weist einen Umlenkhohlraum 351 auf. Dieser Umlenkhohlraum ist bevorzugt eine einfache Einfräsung in die Umlenkplatte 350. Das Kühlprofil 300 mit der Kühlprofiloberfläche 340 kann einfacherweise über Befestigungsbohrungen 341 mit dem jeweiligen Strukturbauteil der Werkzeugmaschine stabil verbunden werden. Somit ist auch eine Austauschbarkeit der einzelnen Kühlprofile des Strömungskanalsystems der Werkzeugmaschine z. B. im Falle des Auftretens von Verschleißerscheinungen möglich. Mit Hilfe der gezeigten Kühlprofile ist eine sehr einfache und kostengünstige Ausbildung eines Strömungskanalsystems/Umwälzkreislaufs möglich. Somit kann schon durch Einsatz von nur wenigen Kühlprofilen an den warmen und kalten Seiten der Werkzeugmaschine eine einfache Temperierung der Werkzeugmaschine stattfinden.

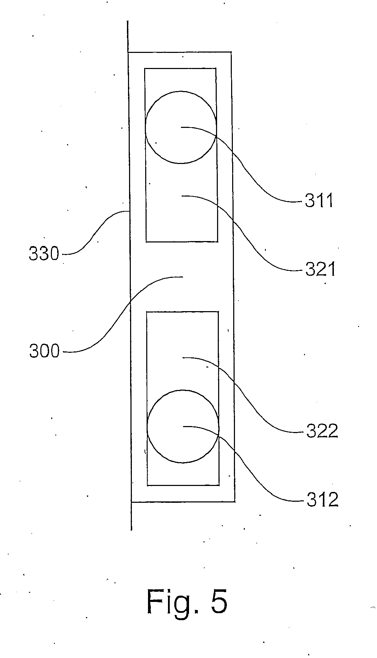

Der Querschnitt eines Kühlprofils des Strömungskanalsystems ist exemplarisch in Figur 5 dargestellt. Das dargestellte Kühlprofil 300 ist als Rechteckhohlprofil ausgestaltet mit zwei getrennten Kammern. Das Kühlprofil weist einen ersten Hohlraum 311 und einen zweiten Hohlraum 312 auf. Der erste Hohlraum 311 ist von der ersten Hohlraumumfassung 321 umschlossen. Der zweite Hohlraum 312 ist von der zweiten Hohlraumumfassung 322 umschlossen. An der linken Seite befindet sich die Befestigungsseite 330 des Kühlprofils 300. Die ersten und zweiten Hohlraumumfassungen können direkt als Hohlraum ausgestaltet werden oder aus einem Material mit sehr hoher Wärmeleitfähigkeit ausgebildet sein. Sind die Hohlraumumfassungen als eigentliche Hohlräume ausgestaltet, so umfasst das gezeigte Kühlprofil 300 faktisch zwei rechteckige große Kammern, die über die Vorlauf- und Rücklaufanschlüsse am Strömungskanalsystem angeschlossen sind. Da dabei die Hohlräume eine besonders große Menge des Temperiermediums aufnehmen können, kann auch das jeweilige Strukturbauteil der Werkzeugmaschine besonders effektiv temperiert werden.

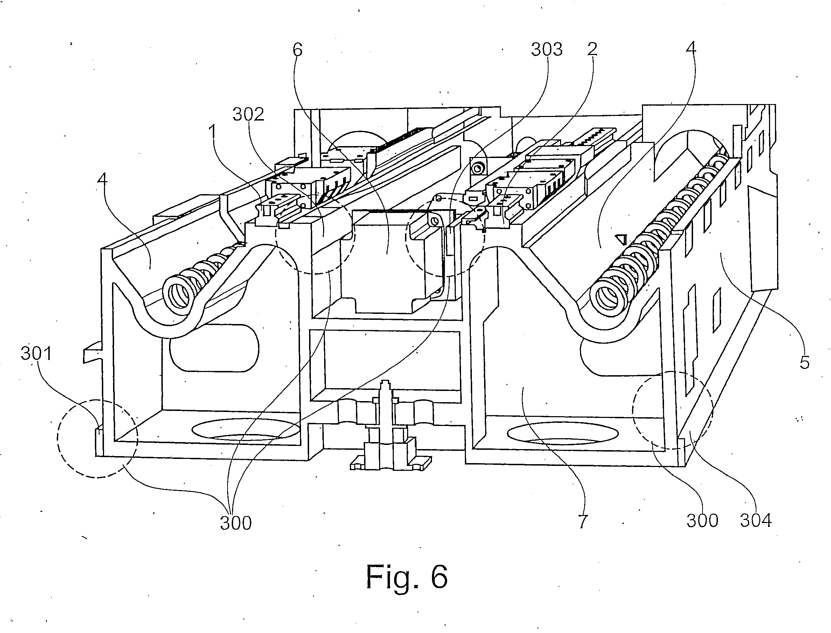

In Figur 6 ist ein Maschinenbett mit mehreren Kühlprofilen 300 des Strömungskanalsystems dargestellt. An der Unterseite des Maschinenbetts befindet sich dabei das erste Kühlprofil 301 und das vierte Kühlprofil 304. Diese beiden Kühlprofile befinden sich somit an der nicht erwärmten bzw. kalten Seite des Maschinenbetts. In diesen Kühlprofilen wird somit das Temperiermedium abgekühlt bzw. Wärme abgegeben. An der Oberseite des Maschinenbetts befinden sich das zweite Kühlprofil 302 und das dritte Kühlprofil 303, welche direkt an wärmeerzeugenden Funktionskomponenten angeordnet sind. Insbesondere ist das zweite Kühlprofil 302 und das dritte Kühlprofil 303 an der ersten Führung 1 und an der zweiten Führung 2 angeordnet. Im Zentrum des Maschinenbetts können sich zudem wärmeerzeugende Antriebe 6 befinden. Das zweite Kühlprofil 302 und das dritte Kühlprofil 303 nehmen über das darin zirkulierende Temperiermedium die eingetragene Wärme der wärmeerzeugenden Funktionskomponenten auf und transportieren diese in Kühlprofile in kälteren Bereichen des Maschinenbetts oder der Werkzeugmaschine. Die Werkzeugmaschine und insbesondere das dargestellte Werkzeugmaschinenbett weist eine Bettspülung 4 auf und Hohlkammern 7. Die in Figur 6 dargestellte Anordnung der verschiedenen Kühlprofile führt zu einer besonders effektiven Temperierung und somit zu einem besonders effektiven Wärmeausgleich bzw. einer besonders effektiven Wärmeverteilung im Maschinenbett, da die Profile besonders nahe an den wärmeerzeugenden Funktionskomponenten angeordnet sind und die für den Wärmeausgleich vorgesehenen Profile in besonders kalten Bereichen des Maschinengestells angeordnet sind. Zudem ist die dargestellte Anordnung der Kühlprofile besonders kostengünstig herzustellen, da lediglich die vier Hohlprofile an der Werkzeugmaschine bzw. dem Werkzeugmaschinenbett angebracht werden müssen, um dieses ausreichend bzw. wirkungsvoll zu temperieren.

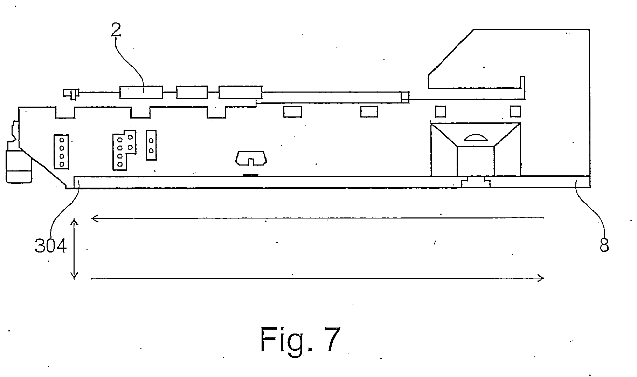

Zur weiteren Erläuterung der in Figur 6 dargestellten Werkzeugmaschine bzw. des dargestellten Werkzeugmaschinenbetts ist in Figur 7 eine Seitenansicht des Werkzeugmaschinenbetts dargestellt. Über das in Figur 7 dargestellte vierte Kühlprofil 304 an der Unterseite des Maschinenbetts wird ein Teil des Strömungskanalsystems dargestellt. Insbesondere ist in Figur 7 mit den Pfeilen unterhalb des Maschinenbetts eine schematische Zirkulation des Temperiermediums innerhalb des Strömungskanalsystems bzw. des Kühlprofils dargestellt. An der rechten Außenseite des vierten Kühlprofils 304 befindet sich der Kühlprofilanschluss 8. Das Temperiermedium wird den schematischen Flusspfeilen folgend von dem Kühlprofilanschluss 8 hin zum linken äußeren Ende des Maschinenbetts geleitet und zurück.

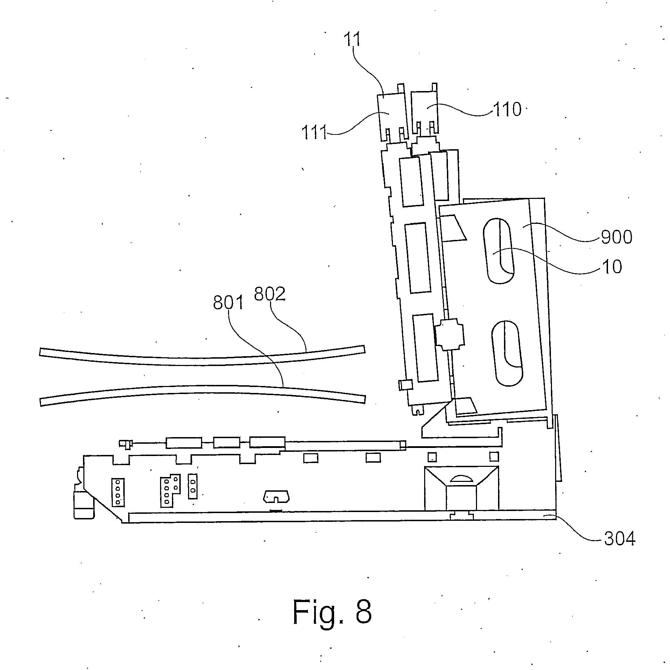

In Figur 8 ist eine gekühlte und ungekühlte Werkzeugmaschine im Vergleich dargestellt. Die dargestellte Werkzeugmaschine umfasst dabei einen Ständer 900 mit Ständeraussparungen 10. An der Unterseite des Maschinenbetts ist ein viertes Kühlprofil 304 und an der Oberseite des Ständers 900 ist der obere Antrieb 11 dargestellt. Die Ausgangsstellung des oberen Antriebs 110 zeigt im Vergleich zur Verformungsstellung des oberen Antriebs 111 eine deutliche Abweichung. Über die schematischen Linien 801 und 802 soll zudem nochmals die Verformung des Maschinenbetts illustriert werden. Die in Figur 8 dargestellten Verformungen der Werkzeugmaschine sind vergrößert gezeigt. Dennoch ist festzustellen, dass durch die erfindungsgemäße Anordnung der erfindungsgemäßen Kühlprofile an den verschiedenen Bereichen der Werkzeugmaschine eine deutliche Verbesserung (Reduzierung) der Verbiegung und Krümmung der Werkzeugmaschine festzustellen ist.

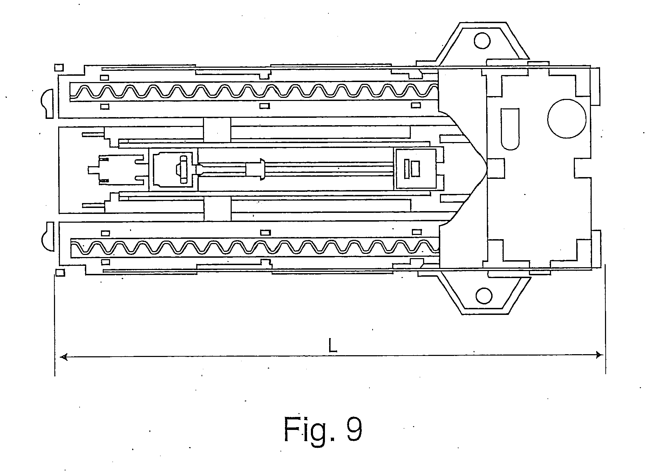

In Figur 9 ist die Draufsicht auf das Maschinenbett dargestellt. Insbesondere bei Werkzeugmaschinen mit einem sehr langen Maschinenbett wirken sich die Krümmungen des Maschinenbetts besonders stark auf die Bearbeitungsgenauigkeit der Werkstücke aus. In Figur 9 ist die Länge der Werkzeugmaschine bzw. die Länge des Werkzeugmaschinenbetts mit L bezeichnet.

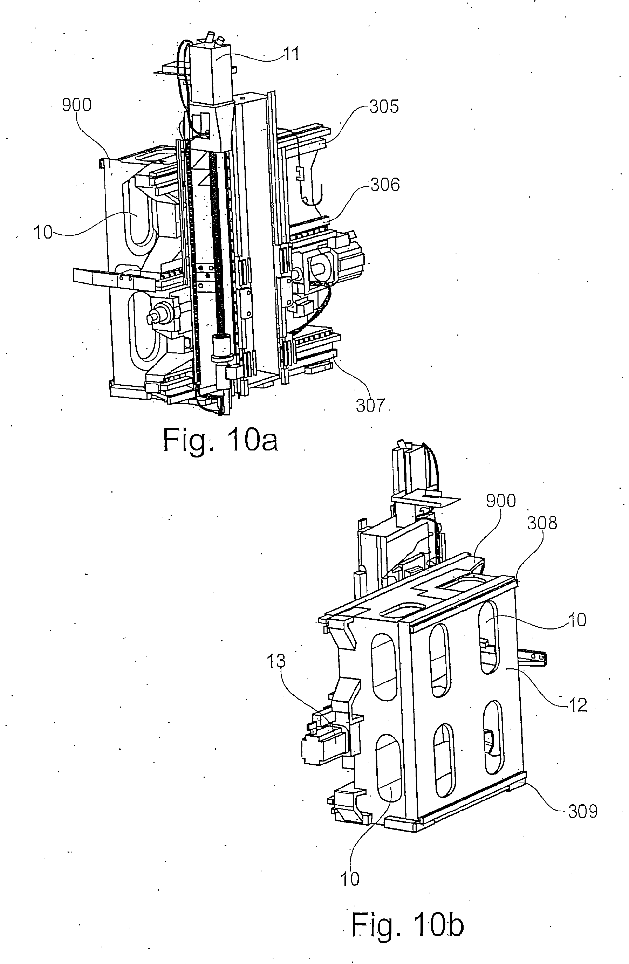

Analog zu den Anordnungen der Kühlprofile auf den verschiedenen Seiten des Ständers 900 in Figur 2, sind in Figur 10a und 10b bevorzugte Anordnungen der Kühlprofile am Ständer der Werkzeugmaschine an einem konkreten Beispiel dargestellt. In Figur 10a ist ein fünftes Kühlprofil 305 entlang einer oberen Kante des Ständers 900 angeordnet. Mittig entlang einer Achse des Ständers 900 ist ein sechstes Kühlprofil 306 angeordnet. An der Unterseite des Ständers 900 ist ein siebentes Kühlprofil 307 angeordnet. Durch die dargestellte Anordnung der Kühlprofile kann ein Ausgleich der Wärmeentwicklung am mittleren Antrieb 13 vom sechsten Kühlprofil 306 hin zu den fünften und siebten Profilen des Ständers stattfinden. In Figur 10b ist die Rückansicht 12 des Ständers 900 der Werkzeugmaschine dargestellt. Der Ständer 900 weist dabei an seiner Oberseite ein achtes Kühlprofil 308 und an seiner Unterseite ein neuntes Kühlprofil 309 auf.

Zur weiteren Erläuterung der Erfindung und der speziellen Anordnung der verschiedenen Kühlprofile, kann das erfindungsgemäße Strömungskanalsystem der Werkzeugmaschine kann auch als Temperiervorrichtung zum Temperieren der Werkzeugmaschine angesehen werden. Verschiedene Kanäle (erste und zweite Strömungskanäle) des Strömungskanalsystems in denen das Temperiermedium umgewälzt wird, sind dabei in ersten und zweiten Bereichen der Werkzeugmaschine angeordnet. In den ersten Bereiche sind dabei Wärmequellen angeordnet und die zweiten Bereiche sind von den ersten Bereichen beabstandet. Der durch die Wärmequellen erzeugte Wärmeeintrag in die zweiten Bereiche kann geringer sein als in die ersten Bereiche. Die ersten Strömungskanäle können in den ersten Bereichen und die zweiten Strömungskanäle können in den zweiten Bereichen angeordnet sein. Die Strömungskanäle können zudem entlang der Kanten und/oder auf den Flächen der Strukturteile der Werkzeugmaschine angeordnet sein. Die Strömungskanäle können so auf den Strukturteilen der Werkzeugmaschine angeordnet sein, dass beim Umwälzen des Temperiermediums von den ersten Strömungskanälen in die zweiten Kanäle das Temperaturgefälle der verschiedenen Bereiche der Werkzeugmaschine abgebaut werden kann. Durch die Anordnung der Strömungskanäle in den verschiedenen Bereichen der Werkzeugmaschine kann auf einfache Weise ein Umverteilen der in die Struktur der Werkzeugmaschine eingebrachten Wärme bewirkt werden

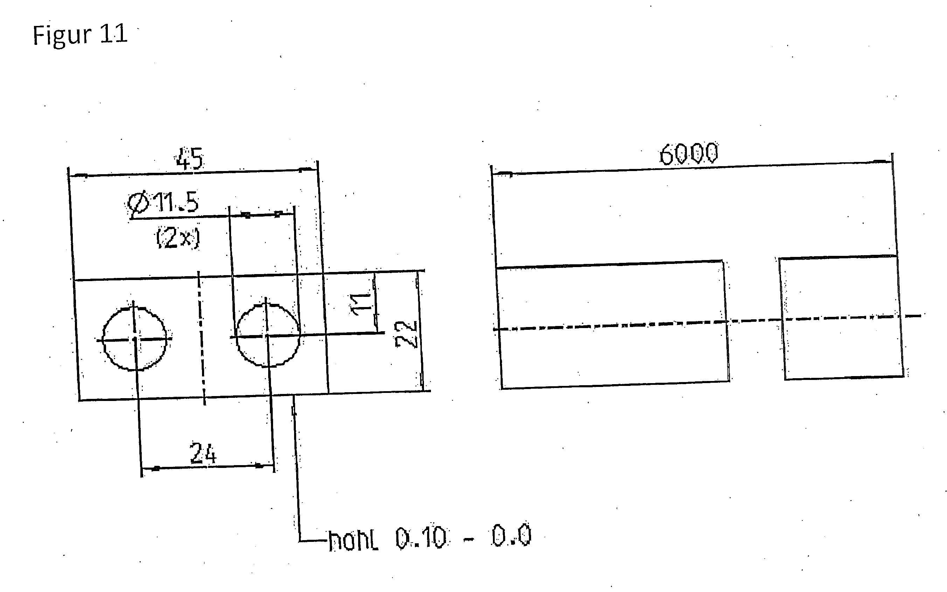

In Figur 11 sind beispielhafte Abmessungen für eine besonders vorteilhafte Ausgestaltung des Kühlprofils bzw. Querschnitts des Kühlprofils dargestellt. Für dieses Hohlprofil wird dabei insbesondere ein Material mit sehr hoher Wärmeleitfähigkeit bevorzugt.

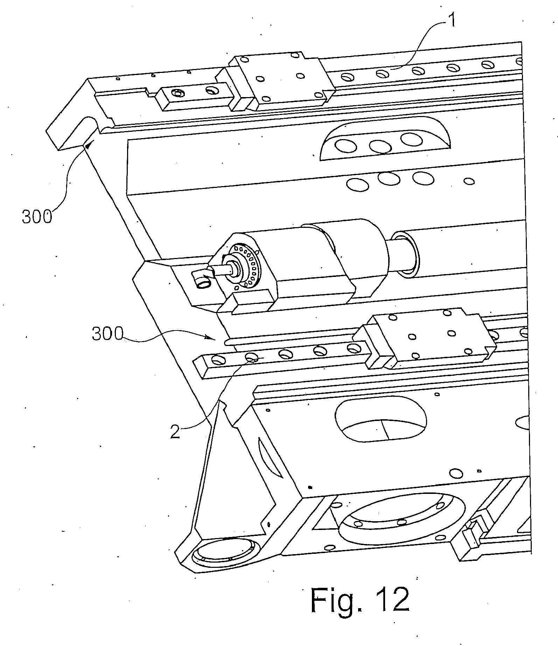

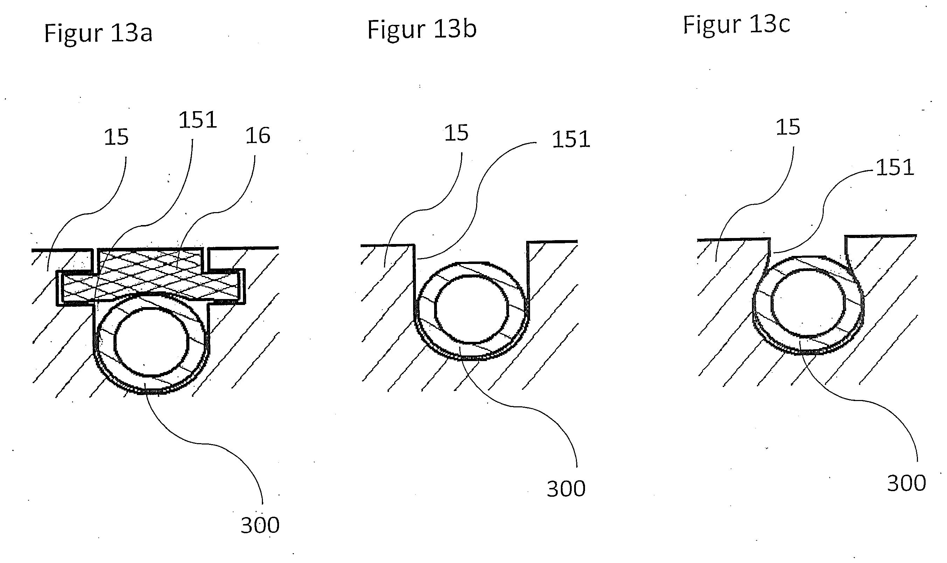

Um den Wärmeabtransport insbesondere bei den Führungen weiter erhöhen zu können, ist es vorteilhaft die Kühlprofile in Nuten unterzubringen, welche direkt neben der Führung angeordnet sind. In Figur 12 sind Kühlprofile in Nuten, welche direkt neben der Führung 1 und der Führung 2 angeordnet sind, dargestellt. Somit wird durch die in Figur 12 gezeigte Anordnung der Kühlprofile 300 direkt bei den Führungen 1 und 2 ein Wärmeabtransport optimal ermöglicht, sodass sich die Verformungen und Verbiegungen bzw. die Krümmungen des Strukturteils der Werkzeugmaschine minimieren lassen. Die zur Fixierung und Anbringung der Kühlprofile in die Nuten bzw. Ausfräsungen bevorzugten Befestigungsmöglichkeiten sind in den Figuren 13a bis 13c gezeigt.

In Figur 13a ist ein Kühlprofil 300 gezeigt, welches in einer Ausfräsung (Nut 151) im Grundelement 15 des Strukturteils der Werkzeugmaschine angeordnet ist. Das Kühlprofil 300 ist über einen Befestigungsdeckel 16 in die Ausfräsung so eingepresst, dass eine optimale Berührung des Kühlprofils mit dem Grundelement gewährleistet ist, und sodass die Wärmeübertragung maximiert wird. Dies wird z. B. über den dargestellten Befestigungsdeckel 16 gewährleistet, welcher auf das Kühlelement 300 aufgepresst wird und sich so verformt, dass der Befestigungsdeckel 16 einerseits in die Befestigungsnuten am Grundelement eingreift und andererseits sich der Oberfläche des Kühlprofils 300 anpasst.

In Figur 13b ist ein Kühlprofil 300 dargestellt, welches in eine Ausfräsung im Grundelement 15 eingepresst ist.

In Figur 13c ist die Ausfräsung im Grundelement 15 derart gestaltet, dass das Kühlprofil 300 so in die Ausfräsung des Grundelements eingepresst werden kann, dass diese im keilförmigen Teil der Ausfräsung im Grundelement 15 fixiert wird. Somit wird hier bei der Installation des Kühlprofils 300, dieses leicht zusammengepresst durch den Hals der Ausfräsung ins Grundelement 15 geführt, sodass sich das Kühlprofil im bauchigen Element der Ausfräsung wieder ausdehnen kann und von selbst nicht mehr durch den Hals der Ausfräsung des Grundelements 15 rutscht. Durch die Vorsehung von keilartigen Ausfräsungen zur Fixierung des Kühlprofils 300 kann eine besonders günstige Form der Befestigung des Kühlprofils bereitgestellt werden.

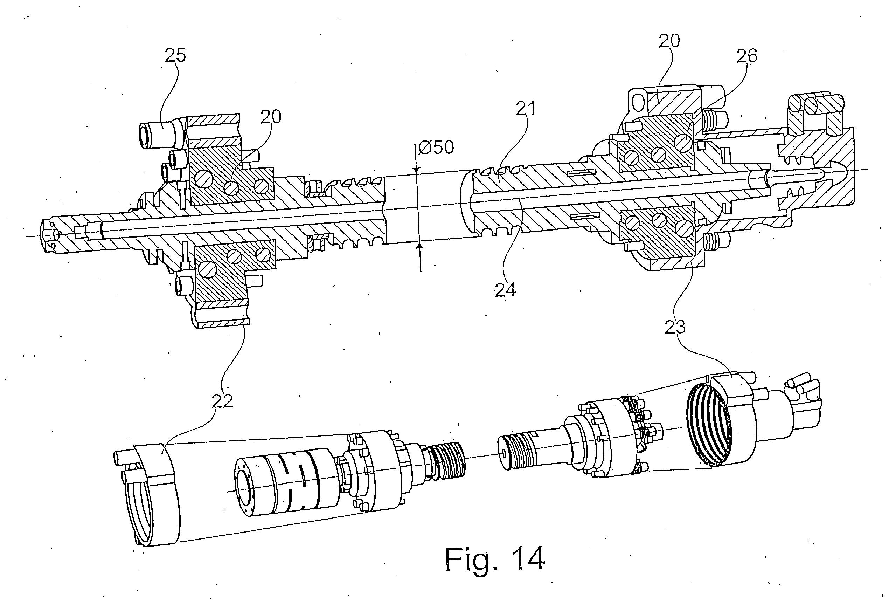

In Figur 14 ist eine Spindelkernkühlung kombiniert mit einer Spindellagerkühlung dargestellt. Um die Temperaturstabilität der Spindel der Werkzeugmaschine weiter zu erhöhen, kann zusätzlich zur Spindelkernkühlung eine Spindellagerkühlung vorgesehen werden. Die Spindellagerkühlung wird dabei über die zweiten Kühlbohrungen 25 und die dritten Kühlbohrungen 26 verwirklicht. Die zweiten Kühlbohrungen 25 befinden sich dabei an einem Kühlring 22, der auf die Lagerung 20 aufgebracht ist. Die dritten Kühlbohrungen 26 befinden sich in einem Kühltopf 23, welcher an der Stirnseite der Spindel angebracht wird. Somit wird im dargestellten Ausführungsbeispiel nicht nur der Kern 21 der Spindel über die erste Kühlbohrung 24 gekühlt, sondern es werden zudem auch die Lagerungen an den Außenseiten über die zweite Kühlbohrung 25 und die dritte Kühlbohrung 26 gekühlt bzw. temperiert und somit eine höhere Temperaturstabilität und höhere Präzision der Werkzeugmaschine erreicht. Der Kühlring 22 weist in seinem Inneren mehrere Kühlbohrungen auf, durch welche das Temperiermedium umgewälzt wird und mit Hilfe derer die Temperatur der Lagerung 20 stabil gehalten werden kann.

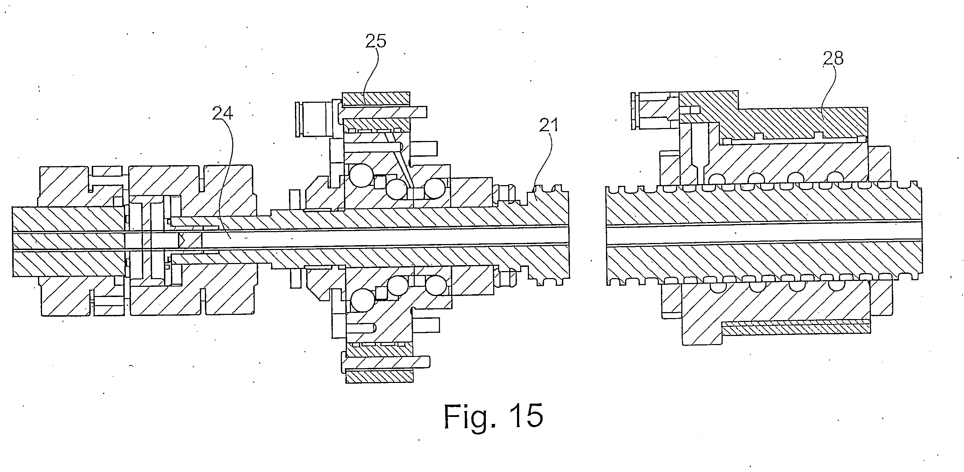

In Figur 15 ist nochmals ein Querschnitt durch die in Figur 15 gezeigte Spindelanordnung dargestellt. In Figur 15 ist zudem eine Mutterkühlung exemplarisch dargestellt. Dabei wird am äußeren Umfang der Mutter ein zusätzlicher zweiter Kühlring mit verschiedenen Kühlbohrungen angebracht. Somit wird neben der ersten Kühlbohrung 24 auch über die zweiten Kühlbohrungen 25 und über die Kühlbohrungen im zweiten Kühlring 28 eine Temperaturstabilisierung der Spindel erreicht.

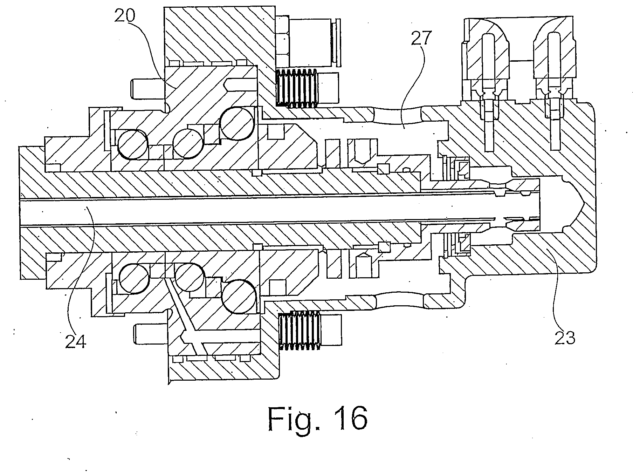

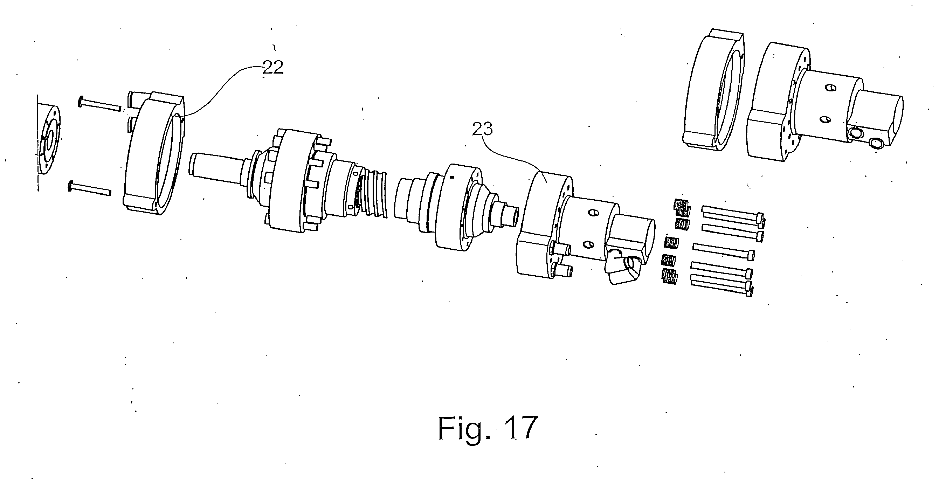

In Figur 16 ist nochmals eine kombinierte Lager- und Spindelkühlung dargestellt. Dabei wird über einen Kühltopf 23 kombiniert mit einem Kühlring, welcher um den äußeren Umfang des dargestellten Lagers angeordnet ist und über darin vorgesehene Kühlkanäle des Strömungskanalsystems einer Temperierung einerseits des Lagers und andererseits des Spindelkerns 21 bewirkt. Durch die Temperierung des Spindelkerns 21 und gleichzeitig auch der Lager 20 der Spindel kann die Präzision der Werkzeugmaschine besonders gesteigert werden. Zur Veranschaulichung sind in Figur 17 nochmals der Kühlring 22 und der Kühltopf 23 der vorhin genannten Temperierung an der Spindel dargestellt. Der Kühlring 22 und der Kühltopf 23 werden dabei über Verschraubungen miteinander fixiert. Besonders bevorzugt ist eine Ausgestaltung, bei der der Kühlring 22 als auch der Kühltopf 23 aus einem Aluminiumguss hergestellt werden, da dadurch eine besonders hohe Temperaturstabilisierung der Werkzeugspindel erreicht werden kann. Zudem wird durch den Aluminiumguss das Gewicht der Spindel nur minimal erhöht.

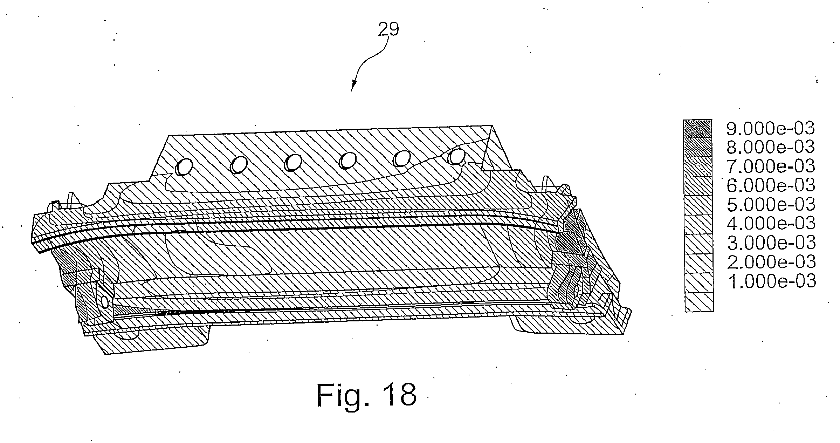

In Figur 18 ist die Verlagerung des gekühlten Querträgers 29 in Millimeter dargestellt. Durch die zusätzliche Kühlung an den Führungen des Querträgers lässt sich die Biegung des Querträgers deutlich reduzieren von 12 µm auf 2 µm bei Referenzführung. An der Gesamtverlagerung hat die Biegung im nicht gekühlten Zustand einen Anteil von rund 30 %. Die anderen 60 % lassen sich folgendermaßen erklären: Ausdehnung des x-Schlittens durch Erwärmung der Kugelrollspindelmutter; Ausdehnung des Querträgers in der Breite (y-Richtung der Maschine); Temperaturdifferenzen des Querträgers in z-Richtung, dadurch Drehung um die x-Achse und Verlagerung in y-Richtung.

In einer besonders vorteilhaften Ausgestaltung der vorliegenden Erfindung ergeben sich für die Rohre des Strömungskanalsystems ein erforderlicher Innendurchmesser von nur 9 mm um die erforderliche Kühlleistung im Querträger 29 zu erreichen. Der erforderliche Volumenstrom liegt dabei bei 6 L/Min, wobei die optimale Vorlauftemperatur bei 23° C liegt. Mit diesen Randbedingungen kann die Verformung der Werkzeugmaschine deutlich reduziert werden.

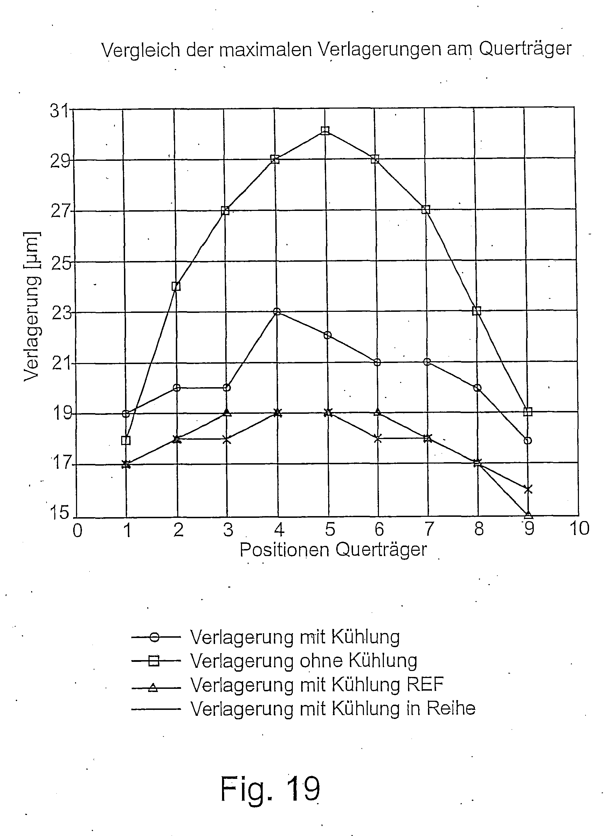

In Figur 19 ist der Vergleich der maximalen Verlagerungen am Querträger 29 zusammenfassend nochmals dargestellt. Deutlich ist dabei der Unterschied zwischen den Verlagerungen mit Kühlung und den Verlagerungen ohne Kühlung zu sehen. Die Verlagerungen sind in Figur 19 in Abhängigkeit der Position am Querträger dargestellt. Die Verlagerung selbst ist in Figur 19 in Micrometer dargestellt.

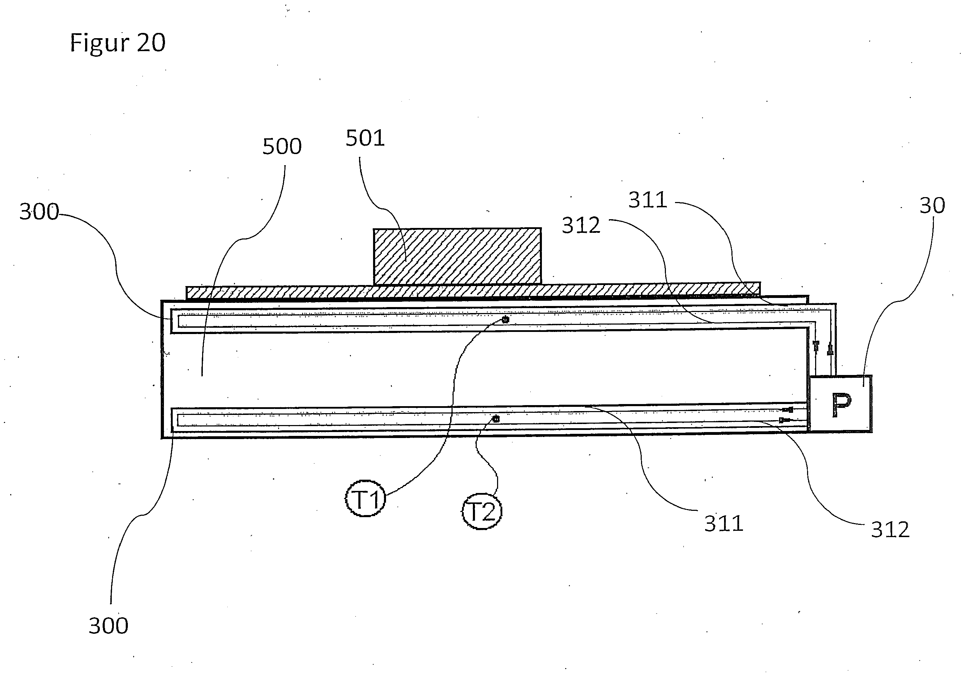

Figur 20 zeigt einen vereinfachten Regelkreis zur Regelung des Volumenstroms des Temperiermediums im Strömungskanalsystem (301-309) am Beispiel eines Maschinenbetts 500. Das Strömungskanalsystem besteht vereinfacht aus zwei Kühlprofilen 300 welche jeweils einen Vorlauf 311 und einen Rücklauf 312 aufweisen. Die Anschlüsse der Kühlprofile 300 werden zu einer Pumpe 30 geführt. Mit Hilfe der Pumpe 30 wird das Temperiermedium im Strömungskanalsystem umgewälzt. Über die Leistung der Pumpe 30 kann somit der Volumenstrom des Temperiermediums eingestellt werden. Abhängig von der jeweiligen Werkzeugmaschine, bzw. dem betrachteten Bauteil und den dort vorliegenden wärmeerzeugenden Funktionskomponenten und den installierten Kühlprofilen, kann der Volumenstrom im Strömungskanalsystem so geregelt werden, dass eine bestimmte Differenztemperatur innerhalb der verschiedenen Bereiche oder Abschnitte des Strömungskanalsystems nicht überschritten wird. Insbesondere spielt dabei der verfügbare Querschnitt zur Führung des Temperiermediums in den Strömungskanälen eine wichtige Rolle. Ein weiterer Faktor ist der auftretende Wärmeeintrag der Funktionskomponenten in die Struktur der Werkzeugmaschine. Abhängig von diesen Faktoren kann die Pumpe so gewählt werden, das über die Regelung der Pumpleistung der Volumenstrom stets so eingestellt wird, dass der Betrag der Differenztemperatur des Temperiermediums einen Wert von 3°C, und besonders vorteilhaft 1 °C, nicht überschreitet. Dadurch ist es möglich die Verformungen und insbesondere die Krümmungen und Verbiegungen der Werkzeugmaschinenstruktur so zu limitieren, dass ein optimales Verhältnis zwischen Temperierungsaufwand und Bauteilbearbeitungsgenauigkeit erreicht werden kann. Zur Regelung des Volumenstroms werden zudem Temperaturen an der Oberseite und der Unterseite des Maschinenbetts 500 gemessen. Die Messpunkte der Temperatur T1 und T2 sind dabei bevorzugt in den Bereichen der auftretenden Maximaltemperaturen, jeweils an der Oberseite und Unterseite (kalte und warme Seite der jeweiligen Struktur), vorgesehen. Die wärmeerzeugenden Funktionskomponenten sind in Figur 20 beispielhaft anhand des Maschinentischs 501 dargestellt.

## Patentansprüche

1. Werkzeugmaschine mit einem aus Strukturteilen aufgebauten Maschinengestell und daran montierten Komponenten, die Funktionskomponenten umfassen, die im Betrieb der Werkzeugmaschine Wärme erzeugen, die durch Wärmetransport in die Strukturteile und die Komponenten eingetragen wird, mit einem Strömungskanalsystem (301-309), mit ersten und zweiten Strömungskanälen, in dem ein Temperiermedium umgewälzt wird, das derart an den Strukturteilen und den Komponenten der Werkzeugmaschine in ersten Bereichen und von den ersten Bereichen beabstandeten zweiten Bereichen angeordnet ist, dass infolge der Durchströmung mit dem Temperiermedium die durch die Funktionskomponenten erzeugte Wärme in dem Maschinengestell und den Komponenten verteilt wird wobei der durch die Funktionskomponenten erzeugte Wärmeeintrag in die zweiten Bereiche geringer ist als in die ersten Bereiche, sodass ein Ausgleichen des Temperaturgradienten in der Werkzeugmaschine ausschließlich durch Umwälzen des Temperiermediums im Strömungskanalsystem (301-309) erfolgt,
**dadurch gekennzeichnet, dass** die Strömungskanäle des Strömungskanalsystems (301-309) als Hohlprofile ausgebildet sind und auf der Oberfläche der Komponenten der Werkzeugmaschine angeordnet sind und
die Werkzeugmaschine ein Maschinenbett (500) und einen Maschinenständer (900) umfasst und dass Strömungskanäle des Strömungskanalsystems (301-309) auf der Oberseite und der Unterseite entlang der Kanten des Maschinenbetts (500) und auf der Oberseite und der Unterseite entlang der Kanten des Ständers (900) angeordnet sind.

2. Werkzeugmaschine nach Anspruch 1, **dadurch gekennzeichnet, dass** das Strömungskanalsystem (301-309) derart an den Strukturteilen und Komponenten der Werkzeugmaschine angeordnet ist, dass Verkippungen und/oder Verlagerungen der Strukturteile und Komponenten verhindert werden.

3. Werkzeugmaschine nach einem der Ansprüche 1 bis 2, **dadurch gekennzeichnet, dass** Strömungskanäle des Strömungskanalsystems (301-309) als Kühlprofile (300) ausgestaltet sind und dass das Kühlprofil (300) zumindest einen Vorlaufkanal und einen Rücklaufkanal zur Aufnahme des Temperiermediums umfasst.

4. Werkzeugmaschine nach Anspruch 3, **dadurch gekennzeichnet, dass** der Vorlaufkanal mit dem Rücklaufkanal leitend verbunden ist, sodass das Temperiermedium umgeleitet wird.

5. Werkzeugmaschine nach Anspruch 3 oder 4, **dadurch gekennzeichnet, dass** der Vorlaufkanal mit dem Rücklaufkanal über eine geschweißte Platte (350) mit eingefräster Bahn, zur Umlenkung des Vorlaufs in den Rücklauf, verbunden ist.

6. Werkzeugmaschine nach einem der Ansprüche 3 bis 5, **dadurch gekennzeichnet, dass** die Kühlprofile (300) auf die Komponenten der Werkzeugmaschine aufgeschraubt sind.

7. Werkzeugmaschine nach Anspruch 1, **dadurch gekennzeichnet, dass** Strömungskanäle des Strömungskanalsystems (301-309) als Rohre ausgestaltet sind und dass die Werkzeugmaschine Nuten (151) aufweist, in denen die Rohre angebracht sind.

8. Werkzeugmaschine nach Anspruch 7, **dadurch gekennzeichnet, dass** die Rohre über Befestigungsdeckel (16) in den Nuten (151) fixiert sind.

9. Werkzeugmaschine nach einem der Ansprüche 3 bis 8, **dadurch gekennzeichnet, dass** die Rohre der Strömungskanäle aus Kupfer sind.

10. Werkzeugmaschine nach einem der Ansprüche 1 bis 2, **dadurch gekennzeichnet, dass** Strömungskanäle des Strömungskanalsystems (301-309) in Bohrungen in den Komponenten und Strukturteilen der Werkzeugmaschine angeordnet sind.

11. Werkzeugmaschine nach einem der Ansprüche 1 bis 8, **dadurch gekennzeichnet, dass** Strömungskanäle des Strömungskanalsystems (301-309) teilweise im Spindelkern (21) und in der Spindellagerung (20) angeordnet sind.

12. Werkzeugmaschine nach einem der Ansprüche 1 bis 11, **dadurch gekennzeichnet, dass** eine Pumpe (30) zur Regelung des Volumenstroms des Temperiermediums so eingerichtet ist, dass der Betrag der Temperaturdifferenz des Temperiermediums in den verschiedenen Bereichen des Strömungskanalsystems (301-309) auf maximal 3 °C begrenzt wird.

13. Werkzeugmaschine nach einem der Ansprüche 1 bis 12, **dadurch gekennzeichnet, dass** zur Erfassung eines Temperaturgradienten ein erster Temperatursensor im Bereich der Funktionskomponenten und zumindest ein zweiter Temperatursensor in einem Bereich ohne Funktionskomponenten an der Werkzeugmaschine vorgesehen ist.

14. Werkzeugmaschine nach Anspruch 13, **dadurch gekennzeichnet, dass** eine Regelungs- und Steuereinheit vorgesehen ist, die so eingerichtet ist, dass über die Leistung der Pumpe (30) der Volumenstrom des Temperiermediums geregelt wird, sodass der Betrag der Differenztemperatur zwischen dem ersten und zweiten Temperatursensor auf maximal 3 °C begrenzt wird.

15. Verfahren zum Temperieren einer Werkzeugmaschine mit einem aus Strukturteilen aufgebauten Maschinengestell und daran montierten Komponenten, die Funktionskomponenten umfassen, die im Betrieb der Werkzeugmaschine Wärme erzeugen, die durch Wärmetransport in die Strukturteile und die Komponenten eingetragen wird, mit ersten und zweiten Strömungskanälen die ein Strömungskanalsystem (301-309) ausbilden das an den Strukturteilen und den Komponenten der Werkzeugmaschine in ersten Bereichen und von den ersten Bereichen beabstandeten zweiten Bereichen angeordnet ist, wobei der durch die Funktionskomponenten erzeugte Wärmeeintrag in die zweiten Bereiche geringer ist als in die ersten Bereiche und wobei die Strömungskanäle des Strömungskanalsystems (301-309) als Hohlprofile ausgebildet sind und auf der Oberfläche der Komponenten der Werkzeugmaschine angeordnet sind und die Werkzeugmaschine ein Maschinenbett (500) und einen Maschinenständer (900) umfasst und wobei Strömungskanäle des Strömungskanalsystems (301-309) auf der Oberseite und der Unterseite entlang der Kanten des Maschinenbetts (500) und auf der Oberseite und der Unterseite entlang der Kanten des Ständers (900) angeordnet sind, mit dem **Schritt** Ausgleichen des Temperaturgradienten in der Werkzeugmaschine ausschließlich durch Umwälzen des Temperiermediums im Strömungskanalsystem (301-309).

16. Verfahren zum Temperieren einer Werkzeugmaschine nach Anspruch 15, **gekennzeichnet durch den Schritt**
Regeln des Volumenstroms des Temperiermediums in den Strömungskanälen über eine Pumpe (30) derart, dass der Betrag der Differenztemperatur des Temperiermediums in den verschiedenen Bereichen des Strömungskanalsystems (301-309) maximal 3°C, und bevorzugt 1°C, beträgt.

## Claims

1. A machine tool including a machine rack constructed of structural parts and components mounted thereon, said components comprising functional components which generate heat during operation of said machine tool, wherein the heat enters said structural parts and/or said components by heat transport, said machine tool comprising:
a flow channel system (301-309) including first and second flow channels, in which a tempering medium is circulated, said flow channel system being disposed in first areas and second areas spaced apart from said first areas on said structural parts and/or said components of said machine tool such that the heat generated by said functional components is distributed in said machine rack and in said components due to passage of said tempering medium therethrough, wherein the heat input into said second areas produced by said functional components is less than the heat input into said first areas so as to equalize the temperature gradient in said machine tool exclusively by circulating said tempering medium in said flow channel system (301-309),
**characterized in that** said flow channels of said flow channel system (301-309) are formed as hollow profiles and are disposed on a surface of said components of said machine tool, and,
said machine tool comprises a machine bed (500) and a machine post (900), and that said flow channels of said flow channel system (301-309) are disposed on an upper side and a lower side along edges of said machine bed (500) and on an upper side and a lower side along edges of said post (900).

2. The machine tool according to claim 1, **characterized in that** said flow channel system (301-309) is disposed on said structural parts and said components of said machine tool such that tilts and/or displacements of said structural parts and said components are prevented.

3. The machine tool according to one of claims 1 or 2, **characterized in that** said flow channels of said flow channel system (301-309) are configured as cooling profiles (300) and that said cooling profile (300) includes at least one feed channel and one return channel for receiving said tempering medium.

4. The machine tool according to claim 3, **characterized in that** said feed channel is connected to said return channel in a conducting manner such that said tempering medium is redirected.

5. The machine tool according to one of claims 3 or 4, **characterized in that** said feed channel is connected to said return channel via a welded plate (350) having a milled track for redirecting the feed into the return.

6. The machine tool according to one of claims 3 to 5, **characterized in that** said cooling profiles (300) are fixed onto said components of said machine tool with screws.

7. The machine tool according to claim 1, **characterized in that** said flow channels of said flow channel system (301-309) are configured as pipes and that said machine tool comprises grooves (151) in which said pipes are fixed.

8. The machine tool according to claim 7, **characterized in that** said pipes are fixed in said grooves (151) via fixing lids (16).

9. The machine tool according to one of claims 3 to 8, **characterized in that** said pipes of said flow channels are made of copper.

10. The machine tool according to one of claims 1 to 2, **characterized in that** said flow channels of said flow channel system (301-309) are disposed in bores in said components and said structural parts of said machine tool.

11. The machine tool according to one of claims 1 to 8, **characterized in that** said flow channels of said flow channel system (301-309) are partly disposed in a spindle core (21) and in a spindle bearing (20).

12. The machine tool according to one of claims 1 to 11, **characterized in that** a pump (30) for regulating a volume flow of said tempering medium is configured such that an amount of the temperature difference of said tempering medium in various areas of said flow channel system (301-309) is limited to no more than 3 °C.

13. The machine tool according to one of claims 1 to 12, **characterized in that** a first temperature sensor in the area of said functional components and at least one second temperature sensor in an area without functional components are disposed on said machine tool for sensing a temperature gradient.

14. The machine tool according to claim 13, **characterized in that** a regulation and control unit is provided which is configured such that the volume flow of said tempering medium is regulated via the power of said pump (30) such that an amount of the temperature difference between the first and the second temperature sensor is limited to no more than 3 °C.

15. A method for tempering a machine tool including a machine rack constructed of structural parts and components mounted thereon, said components comprising functional components which generate heat during operation of said machine tool, wherein the heat enters said structural parts and said components by heat transport, and including first and second flow channels forming a flow channel system (301-309) disposed in first areas and second areas spaced apart from said first areas on said structural parts and said components of said machine tool, wherein a heat input into said second areas generated by said functional components is less than a heat input into said first areas and wherein said flow channels of said flow channel system (301-309) are formed as hollow profiles and are disposed on the surface of said components of said machine tool, and said machine tool comprising a machine bed (500) and a machine post (900), wherein said flow channels of said flow channel system (301-309) are disposed on an upper side and a lower side along edges of said machine bed (500) and on an upper side and a lower side along edges of said post (900), said method comprising:
equalizing the temperature gradient in said machine tool exclusively by circulating said tempering medium in said flow channel system (301-309).

16. The method for tempering a machine tool according to claim 15, **characterized by the step of:**
regulating the volume flow of said tempering medium in said flow channels via a pump (30) such that an amount of the temperature difference of said tempering medium in the various areas of said flow channel system (301-309) is no more than 3 °C, and preferably no more than 1 °C.

## Revendications

1. Machine-outil comportant un bâti de machine qui est conçu par des éléments structuraux et par des composants qui sont montés sur ceux-ci et qui comprennent des composants fonctionnels générant de la chaleur pendant le fonctionnement de la machine-outil apportée par transfert thermique dans les éléments structuraux et dans les composants, comportant un système de canaux d'écoulement (301 - 309) pourvu de premiers et de seconds canaux d'écoulement et dans lequel circule un milieu de thermorégulation qui est agencé au niveau des éléments structuraux et des composants de la machine-outil dans de premières zones et dans de secondes zones espacées des premières zones, de telle sorte que suite à l'écoulement du milieu de thermorégulation, la chaleur générée par les composants fonctionnels est répartie dans le bâti de machine et dans les composants, l'apport de chaleur généré par les composants fonctionnels étant plus faible dans les secondes zones qu'il ne l'est dans les premières zones, de sorte qu'une compensation du gradient de température dans la machine-outil s'effectue exclusivement par circulation du milieu de thermorégulation dans le système de canaux d'écoulement (301 - 309),
**caractérisée en ce que**
les canaux d'écoulement du système de canaux d'écoulement (301 - 309) sont réalisés sous forme de profilés creux et sont agencés sur la surface des composants de la machine-outil, et
la machine-outil comprend un banc de machine (500) et un montant de machine (900), et **en ce que**
des canaux d'écoulement du système de canaux d'écoulement (301 - 309) sont agencés sur la face supérieure et sur la face inférieure le long des arêtes du banc de machine (500) et sur la face supérieure et sur la face inférieure le long des arêtes du montant (900).

2. Machine-outil selon la revendication 1,
**caractérisée en ce que**
le système de canaux d'écoulement (301 - 309) est agencé sur les éléments structuraux et sur les composants de la machine-outil de telle sorte que des basculements et/ou des déplacements des éléments structuraux et des composants sont empêchés.

3. Machine-outil selon l'une des revendications 1 à 2,
**caractérisée en ce que**
les canaux d'écoulement du système de canaux d'écoulement (301 - 309) sont réalisés sous forme de profilés de refroidissement (300), et **en ce que** le profil de refroidissement (300) comprend au moins un canal d'aller et un canal de retour pour recevoir le milieu de thermorégulation.

4. Machine-outil selon la revendication 3,
**caractérisée en ce que**
le canal d'aller est relié de façon conductrice au canal de retour, de sorte que le milieu de thermorégulation est dévié.

5. Machine-outil selon la revendication 3 ou 4,
**caractérisée en ce que**
le canal d'aller est relié au canal de retour par une plaque soudée (350) ayant une voie fraisée pour renvoyer l'aller jusque dans le retour.

6. Machine-outil selon l'une des revendications 3 à 5,
**caractérisée en ce que**
les profilés de refroidissement (300) sont vissés sur les composants de la machine-outil.

7. Machine-outil selon la revendication 1,
**caractérisée en ce que**
des canaux d'écoulement du système de canaux d'écoulement (301 - 309) sont conçus sous forme de tubes, et **en ce que**
la machine-outil présente des rainures (151) dans lesquelles sont montés les tubes.

8. Machine-outil selon la revendication 7,
**caractérisée en ce que**
les tubes sont fixés dans les rainures (151) par des couvercles de fixation (16).

9. Machine-outil selon l'une des revendications 3 à 8,
**caractérisée en ce que**
les tubes des canaux d'écoulement sont en cuivre.

10. Machine-outil selon l'une des revendications 1 à 2,
**caractérisée en ce que**
les canaux d'écoulement du système de canaux d'écoulement (301 - 309) sont agencés dans des perçages dans les composants et dans les éléments structuraux de la machine-outil.

11. Machine-outil selon l'une des revendications 1 à 8,
**caractérisée en ce que**
les canaux d'écoulement du système de canaux d'écoulement (301 - 309) sont agencés partiellement dans le coeur de broche (21) et dans le support de broche (20).

12. Machine-outil selon l'une des revendications 1 à 11,
**caractérisée en ce que**
une pompe (30) pour réguler le courant volumique du milieu de thermorégulation est conçue de telle sorte que le montant de la différence de température du milieu de thermorégulation dans les différentes zones du système de canaux d'écoulement (301 - 309) est limité au maximum à 3 °C.

13. Machine-outil selon l'une des revendications 1 à 12,
**caractérisée en ce que**
pour détecter un gradient de température, il est prévu un premier capteur de température dans une zone des composants fonctionnels et au moins un second capteur de température dans une zone dépourvue de composants fonctionnels, sur la machine-outil.

14. Machine-outil selon la revendication 13,
**caractérisée en ce que**
il est prévu une unité de régulation et de commande qui est conçue de telle sorte que le courant volumique du milieu de thermorégulation est régulé par la puissance de la pompe (30), de telle sorte que le montant de la température différentielle entre le premier et le second capteur de température est limité au maximum à 3 °C.

15. Procédé de thermorégulation d'une machine-outil comportant un bâti de machine qui est conçu par des éléments structuraux et par des composants qui sont montés sur ceux-ci et qui comprennent des composants fonctionnels générant de la chaleur pendant le fonctionnement de la machine-outil apportée par transfert thermique dans les éléments structuraux et dans les composants,
comportant de premiers et de seconds canaux d'écoulement formant un système de canaux d'écoulement (301 - 309) agencé au niveau des éléments structuraux et des composants de la machine-outil dans de premières zones et dans de secondes zones espacées des premières zones,
l'apport de chaleur généré par les composants fonctionnels étant plus faible dans les secondes zones qu'il ne l'est dans les premières zones, et
les canaux d'écoulement du système de canaux d'écoulement (301 - 309) étant réalisés sous forme de profilés creux et agencés sur la surface des composants de la machine-outil, et
la machine-outil comprenant un banc de machine (500) et un montant de machine (900), et
des canaux d'écoulement du système de canaux d'écoulement (301 - 309) étant agencés sur la face supérieure et sur la face inférieure le long des arêtes du banc de machine (500) et sur la face supérieure et sur la face inférieure le long des arêtes du montant (900),
comprenant l'étape consistant à
compenser le gradient de température dans la machine-outil exclusivement par circulation du milieu de thermorégulation dans le système de canaux d'écoulement (301 - 309).

16. Procédé de thermorégulation d'une machine-outil selon la revendication 15,
**caractérisé par** l'étape consistant à
réguler le courant volumique du milieu de thermorégulation dans les canaux d'écoulement par une pompe (30) de telle sorte que le montant de la température différentielle du milieu de thermorégulation dans les différentes zones du système de canaux d'écoulement (301 - 309) est au maximum de 3 °C, de préférence de 1 °C.
